(19) Europäisches Patentamt

European Patent Office

Office européen des brevets

(11) **EP 0 484 844 B1**

(12) **EUROPEAN PATENT SPECIFICATION**

(45) Date of publication and mention
of the grant of the patent:
**15.05.1996 Bulletin 1996/20**

(51) Int Cl.6: **H04N 11/00**

(21) Application number: **91118750.8**

(22) Date of filing: **04.11.1991**

(54) **Compatibility improvement apparatus**

Gerät zur Verbesserung der Kompatibilität

Appareil d'amélioration de la compatiblité

(84) Designated Contracting States:
**AT BE CH DE DK ES FR GB GR IT LI LU NL SE**

(30) Priority: **05.11.1990 EP 90403115**

(43) Date of publication of application:
**13.05.1992 Bulletin 1992/20**

(73) Proprietor: **THOMSON multimedia**
**F-92400 Courbevoie (FR)**

(72) Inventor: **Boie, Werner, Dr.-Ing.**
**F-67100 Strasbourg (FR)**

(74) Representative:
**Hartnack, Wolfgang, Dipl.-Ing. et al**
**Deutsche Thomson-Brandt GmbH**
**Patentabteilung**
**Göttinger Chaussee 76**
**30453 Hannover (DE)**

(56) References cited:
**WO-A-90/00846**

- **CONTRIBUTION TO THE CLUB DE RENNES YOUNG RESEARCHERS' SEMINAR, M.I.T. Cambridge, Mass., 9th - 13th October 1988, pages 1-20; F.W.P. VREESWIJK: "HD- MAC coding for broadcasting of high definition television signals"**
- **SIGNAL PROCESSING OF HDTV, PROCEEDINGS OF THE SECOND INTERNATIONAL WORKSHOP ON SIGNAL PROCESSING OF HDTV, L'Aquila, 29th February - 2nd March 1988, edited by L. CHIARIGLIONE, pages 337-344; J. VAN DER MEER et al.: "Movement processing for an HD-MAC coding system"**
- **SIGNAL PROCESSINF OF HDTV, II, PROCEEDINGS OF THE THIRD INTERNATIONAL WORKSHOP ON HDTV, Turin, 30th August - 1st September 1989, edited by L. CHARIGLIONE, pages 261-271; P. BERNARD et al.: "HDMAC coding scheme and compatibility"**
- **RTM RUNDFUNKTECHNISCHE MITTEILUNGEN, vol. 34, no. 2, March/April 1990, pages 65-73, Norderstedt, DE; S. BREIDE: "MAC-Kompatible Übertragung der Farbdifferenzsignale in einem zukünftigen HDTV-System mit progressiver Abtastung"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to a compatibility improvement apparatus, e.g. for the use within standard MAC decoders when receiving HDMAC signals.

### Background

Up to now, the HDMAC system proposed as a compatible transmission standard has not reached an acceptable compatibility at the standard MAC receiver. Due to the 4-field encoding technique combined with the line shuffling, the compatible picture suffers from edge crawling and dot pattern artefacts with a flicker frequency of 12.5 Hz. Moreover, within moving picture areas the viewer perceives a disturbing motion judder which results from the synthetic interlace applied within the 40 ms transmission mode. These are only the most disturbing artefacts. Any attempt to improve the compatibility of the HDMAC signal has provided a trade-off between the compatibility at the standard MAC receiver and the signal-to-noise ratio at HDMAC receiver side. Since the noise behaviour of the HDMAC transmission is regarded as a critical feature, a further reduction of the signal-to-noise ratio in favour of a better compatible picture does not seem to be sensible.

### Invention

It is an object of the invention to improve the picture quality when decoding compatibly data compressed HDTV signals, such as HDMAC signals, with a standard decoder, e.g. a D/D2-MAC decoder.

This object will be reached by the features of claim 1. Advantageous additional embodiments are described in the sub-claims.

A standard decoder is modified by including a special compatibility improvement filter. This filter is motion adaptive and will be switched by evaluating a motion information which is transmitted together with the data compressed HDTV signal, e.g. a DATV signal (digital assisted TV). Advantageously this special filter is well suited, too for providing progressivly scanned lines at its output.

This filter reduces or avoids 25 Hz edge flicker, 25 Hz edge crawling, dot pattern artefacts with a flicker frequency of 12.5 Hz and motion judder.

This kind of compatibility improvement filter is very attractive for countries in which e.g. D/D2-MAC has not yet become a real standard. In that case, a known compatibility improvement filter at the encoder, e.g. HDMAC encoder, can be left out or well matched to a converter at the standard decoder side which can produce compatible signals for interlace displays (e.g. 625 lines, 2:1, 50 Hz) or even upconverted signals for progressive displays (e.g. 625 lines, 1:1, 50 Hz). Obviously, this kind of converter offers nearly an optimal solution concerning the compatibility on the one hand and the signal-to-noise ratio at e.g. HDMAC receiver side on the other hand.

Although HDMAC shall supersede all current european TV systems including D/D2-MAC in the long run, there will be a certain demand for low cost receivers with an interlace or progressive display on the market, at least for a transitional period of a decade. Therefore a converter, which provides an acceptable picture quality within the D/D2-MAC standard with a minimum of hardware complexity, will be desired. This may play an important role in TV shops in which the customer will compare different TV sets from a very short viewing distance. It stands out clearly that an offered compatible D/D2-MAC receiver, which shows new and perhaps more disturbing artefacts compared with the current TV standards, does not make much sense. This argument will become even more important when the PALplus standard with a significantly improved picture quality will be introduced and the compatible D/D2-MAC picture will be compared with a PALplus-compatible (with reduced cross-talk) or even with a PALplus-upconverted picture. On the other side, it will also help the broadcaster to reach a large number of viewers with an acceptable picture quality and not only those who can afford a HDMAC receiver.

### Drawings

Preferred embodiments of the invention will now be described with reference to the accompanying drawings, in which

Fig. 1      shows a block diagram of a temporal filter (80ms);

Fig. 2      shows temporal filtering within 80 ms periods;

Fig. 3      shows a resulting temporal filter (80ms);

Fig. 4      shows vertical filtering within a full frame (3 tap filter);

Fig. 5      shows an arrangement of incoming lines within different fields after a half line delay of the first field has been applied;

Fig. 6      shows a kind of vertical filtering;

Fig. 7      shows a block diagram for 40ms processing in a film mode;

Fig. 8      shows the principle of a motion vector adaptive interpolation;

Fig. 9      shows a block diagram for the processing of the motion vector adaptive interpolation of Fig. 8;

Fig. 10      shows a block diagram for a horizontal shift circuit;

Fig. 11      shows the processing of 20ms blocks;

Fig. 12      shows a block diagram for 40ms processing in either camera or film mode;

Fig. 13      shows a block diagram for a horizontal shift circuit for two fields;

Fig. 14      shows the complete structure of a CI filter (luminance);

Fig. 15 shows a combination of the CI filter and an upconversion unit (luminance);

Fig. 16 explains a concept of field insertion in 80ms mode;

Fig. 17 shows horizontal motion vector adaptive interpolation of the first field (40ms mode);

Fig. 18 shows a block diagram for the processing of the horizontal motion vector adaptive interpolation of Fig. 17;

Fig. 19 explains line averaging;

Fig. 20 shows a block diagram for the processing of the vertical upconversion (20ms mode);

Fig. 21 shows a block diagram for the processing of the CI and the upconversion unit (luminance);

Fig. 22 shows the most important horizontal frequency responses;

Fig. 23 shows frequency responses which are active within the 80ms mode;

Fig. 24 shows relevant frequency responses of the 40ms mode;

Fig. 25 illustrates frequency responses within the 20ms mode;

Fig. 26 shows chrominance processing in connection with an upconverting unit;

Fig. 27 explains compatible U, V transmission;

Fig. 28 explains rearranging and vertical interpolation;

Fig. 29 shows an arrangement of the U and V lines;

Fig. 30 explains rearranging and vertical interpolation for U and V;

Fig. 31 shows a block diagram for U, V processing in 40ms mode with two line delays;

Fig. 32 shows a block diagram for U, V processing in 40ms mode with one line delay;

Fig. 33 shows the complete structure of a U, V CI filter;

Fig. 34 shows a block diagram for U, V upconversion in 40ms mode;

Fig. 35 shows a block diagram for U, V upconversion in 20ms mode;

Fig. 36 shows a block diagram for the U, V processing of the CI and the upconversion unit.

Preferred embodiments

The processing of the compatibility improvement (CI) and the upconversion as described in detail below is based on signals supplied by the output of a standard D/D2-MAC decoder chip which produces the Y, U, V components in the interlace standard 625 lines, 2:1, 50 Hz. Consequently, the horizontal resolution of the uncompressed luminance component is limited to 5.6 MHz (-3 dB). Furthermore it is provided that the sampling clock frequency of 13.5 MHz produces an orthogonal sampling grid all the time. The offset of the sampling clock frequency from field to field within the HDMAC encoded signal is therefore not taken into account.

In order to ease the digital signal processing within the consecutive fields, the first field of the input sequence is shifted by 32µs (half line delay) to have the sampled picture elements within the different fields at the same horizontal position available.

The description of the following signal processing is divided into two parts. The first one explains the CI filter for an interlace signal whereas the second part deals with the upconversion producing the interpolated fields at its output.

Further more it is assumed that the CI processed signal and (from that) the interpolated signal are put together to create a full frame by means of a parallel/serial converter with a line period of 32µs of the resulting signal. After the processing of the luminance component will have been explained, the description of the chrominance processing will follow.

Because of the motion adaptivity of the HDMAC encoding, the different transmission modes have to be regarded separately. Also the camera and the film mode must be distinguished. Since a general CI processing for all transmission modes does not make any sense, the presence of the branch decision signal and the motion vectors at the receiver side are assumed. For that purpose a DATV signal decoding done by a separate IC is demanded. This also requires a channel bandwidth for the compatible reception which can carry the encoded DATV signal within the vertical blanking period of the HDMAC signal.

Compatibility problems concerning D/D2-MAC receivers have been already described by the author in the report: "TV systems with enhanced picture quality: A comparison between MUSE and HDMAC", hold at the FKTG-Tagung in Kassel, Germany, May 1990.

Certain CI filters already defined for the HDMAC encoder of the standard HDMAC system do not only reduce the artefacts but also introduce new complex distortions which can only be eliminated by an exact reverse operation. For a better performance of the reproduced compatible picture in conjunction with the below described CI processing, a modification or even cancellation of the CI filters at the HDMAC encoder will be proposed.

Luminance processing:

CI, 80ms mode:

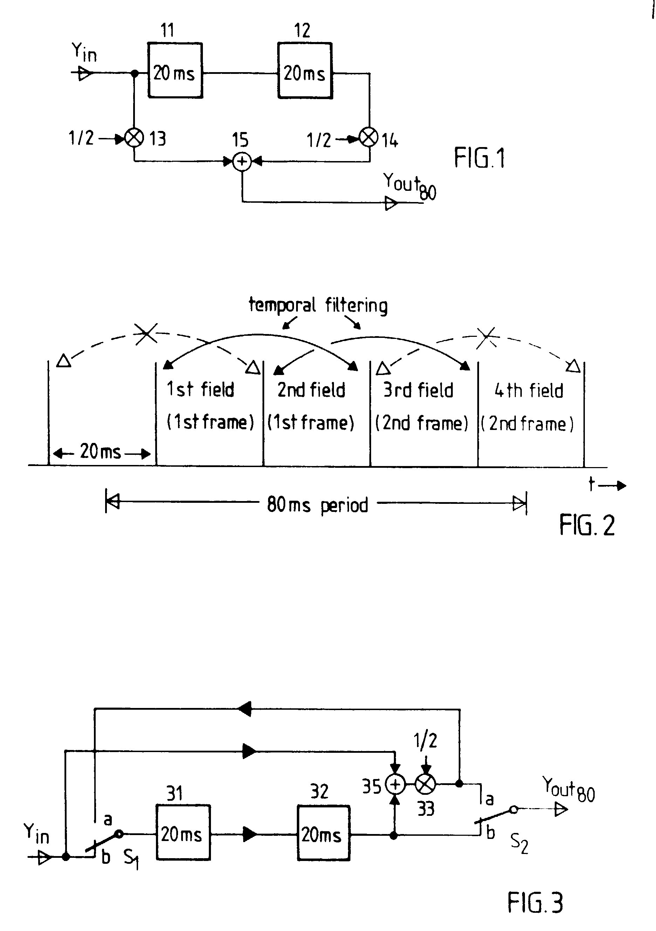

The starting point is to consider the CI filtering as possible within the 80ms mode. As a result of the analysis of the compatibility distortions given in the article mentioned above, it turns out that the main distortions result from the line/field/frame offset sampling rather than the line shuffling which introduces a vertical lowpass filtering of the compatible signal, in essential. A CI filtering of the transmitted HDMAC signal would mean with respect to the analysis given in the above mentioned article that at first a suppression of the 12.5 Hz spectrum takes place by means of a temporal filter. Fig. 1 shows the structure of such a filter which can offer the possibility of an ideal suppression of the 12.5 Hz flickering by choosing equal coefficients of value 0.5. Then a zero will arise at 12.5 Hz within the frequency response. This filter is composed of two 20ms delay circuits 11 and 12, two multipliers or shifters 13 and 14 and an adder 15.

The CCETT has made the proposal to implement a similar temporal filter at the transmitter side, but with different filter coefficients. Yet this approach allows only a certain reduction of the 12.5 Hz flickering at the expense of a reduced signal-to-noise ratio at the HDMAC receiver. Contrary to this known proposal, the temporal filtering at the receiver side can be applied in a most effective way. This has in addition a positive influence on the signal-to-noise ratio at the standard receiver, because the averaging over two fields leads to a 3 dB margin. Obviously, this technique may only be applied when the transmitter is in the 80ms mode. This necessitates the use of the DATV signal to switch off the temporal filtering if another transmission mode is selected.

For reasons of the motion adaptivity, it has to be taken into account the fact that the 80ms mode within one certain picture block is defined for a period of 80ms (i.e. two frames). Afterwards the transmission mode for the same located block can be changed within the HDMAC encoder. In order to avoid "mixed modes", that means to prevent a temporal filtering between picture elements processed within the 80ms mode and such ones which are not, the temporal filtering has to be restricted to a filtering between a first field and a third field (i.e. the first field of the second frame) and between a second field and a fourth field (i.e. the second field of the second frame), respectively, as depicted in Fig. 2.

Since no other temporal filtering can be carried out for the third and fourth field of a 80ms period, the temporal filtered signal has to be fed back into the field delay chain. This kind of field repetition does not cause any problems within the 80ms mode. Fig. 3 illustrates a circuit for this processing. Again two 20ms delay circuits 31 and 32 and an adder 35 is used, but only one multiplier/shifter 33. The switch $S_1$ is necessary to store the temporally filtered signal in place of the incoming signal, whereas switch $S_2$ selects between the actually temporally filtered signal and the repeated one.

Beside the back folded 12.5 Hz spectra also 25 Hz spectra generate certain distortions. Due to the offset sampling from field to field a 25 Hz flickering at vertical edges can arise, but for a great deal of natural pictures, this artefacts can be neglected. If the horizontal resolution of the known diagonal prefilter at the HDMAC encoder would be enhanced, the decoded compatible picture would suffer from even more 25 Hz edge flickering.

CI, 40ms mode:

In the 40ms transmission mode the HDMAC signal introduces two different distortions: motion judder and 25 Hz flickering at vertical edges. The latter is caused by the quincunx sampling applied at the HDMAC encoder. Unfavourably, the known compatibility filter (a vertical filter) is applied prior to the quincunx sampling. Therefore this artefact cannot be avoided. Moreover the diagonal filter shows such a high frequency response in vertical direction beyond 144c/ph (cycles per picture hight), that this leads in conjunction with the known compatibility filter to an "unnatural" high vertical resolution at standard D/D2-MAC receivers. On that account these receivers suffers from an increased 25 Hz flickering at horizontal edges.

At the standard MAC receiver side a vertical lowpass filter can reduce said 25 Hz flickering if a full frame out of one motion phase is available. This holds in any case for the film mode in which the signal within the 40ms block is transmitted by means of a synthetic interlace. For the camera mode the CCETT has proposed a MCCI filter (motion compensated compatibility improvement) at transmitter side. But this filter introduces a part of another motion phase within the second field. The combination of the first and second field in order to apply this vertical filtering will therefore lead to a reduced vertical resolution and sharpness within the reconstructed picture. However, for the film mode only a reduction of the sharpness will arise due to the vertical filtering.

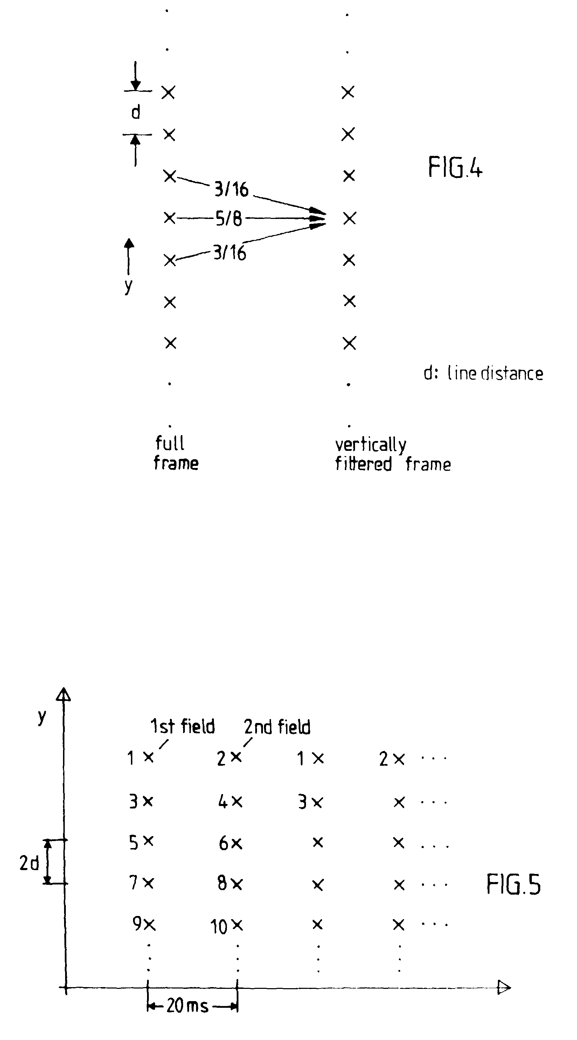

A 3-tap filtering as depicted in Fig. 4 with about 10 dB attenuation is a reasonable compromise between remaining distortions and loss of vertical sharpness.

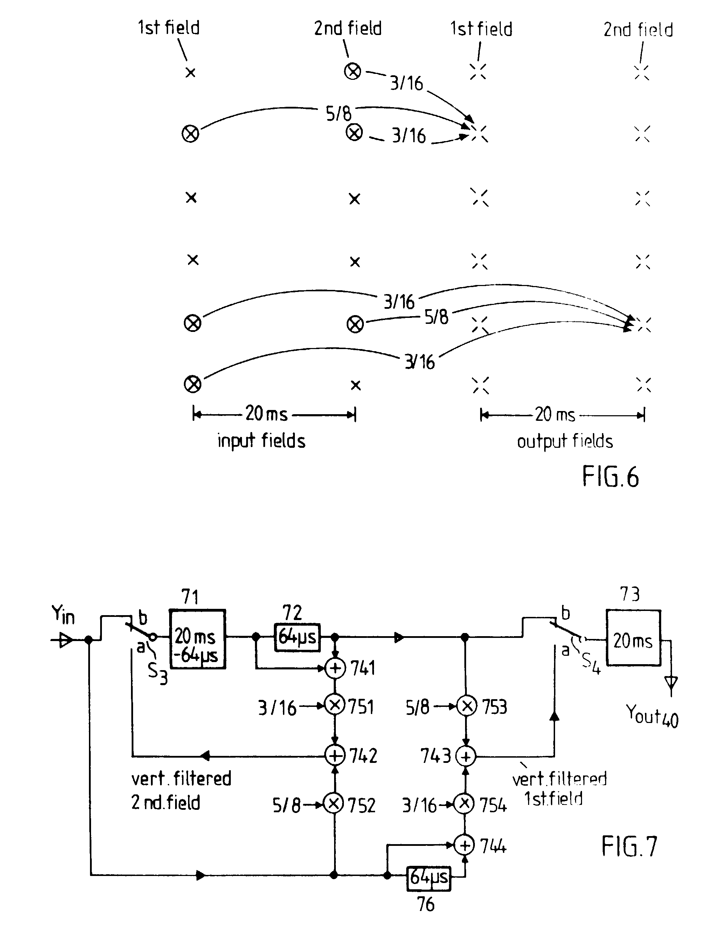

To understand the application of the inventive filtering, it is necessary to consider first the arrangement of the incoming lines within the different fields. Fig. 5 shows the situation after the half line delay of the first field has been applied. The lines of the first field and the lines of the second field belong to the same frame although the first line of the first field and the first line of the second field have now a temporal distance of exact 20ms. The numbering of the lines in Fig. 5 should take this fact into account.

Now considering the vertical filtering of the lines belonging to the first field, besides the actual line also an accessing to those lines is necessary, which are located exactly 20ms and 20ms-64μs later. Concerning the vertical filtering of the lines belonging to the second field, besides the actual line also an accessing to the lines 20ms and 20ms-64μs earlier is necessary. Fig. 6 illustrates the vertical filtering of lines of the first and the second field.

Since the lines of the first and second fields are not always available simultaneously for the vertical filtering, the signal stored in field delays will be replaced by the vertically filtered signal just when both fields are available. Fig. 7 shows a circuit for this processing. Four delay circuits 71, 72, 73 and 76 are involved with respective delay times of 20ms-64µs, 64µs, 20ms and 64µs. Four adders 741 to 744 are included and four multiplier circuits 751 to 754 with respective coefficients of 3/16, 5/8, 5/8 and 3/16.

The most disturbing artefact within the 40ms mode is caused by the synthetic interlace. The position of a moving object in the second field is identical to the position of this object in the first field, thereby generating a discontinuous movement called motion judder.

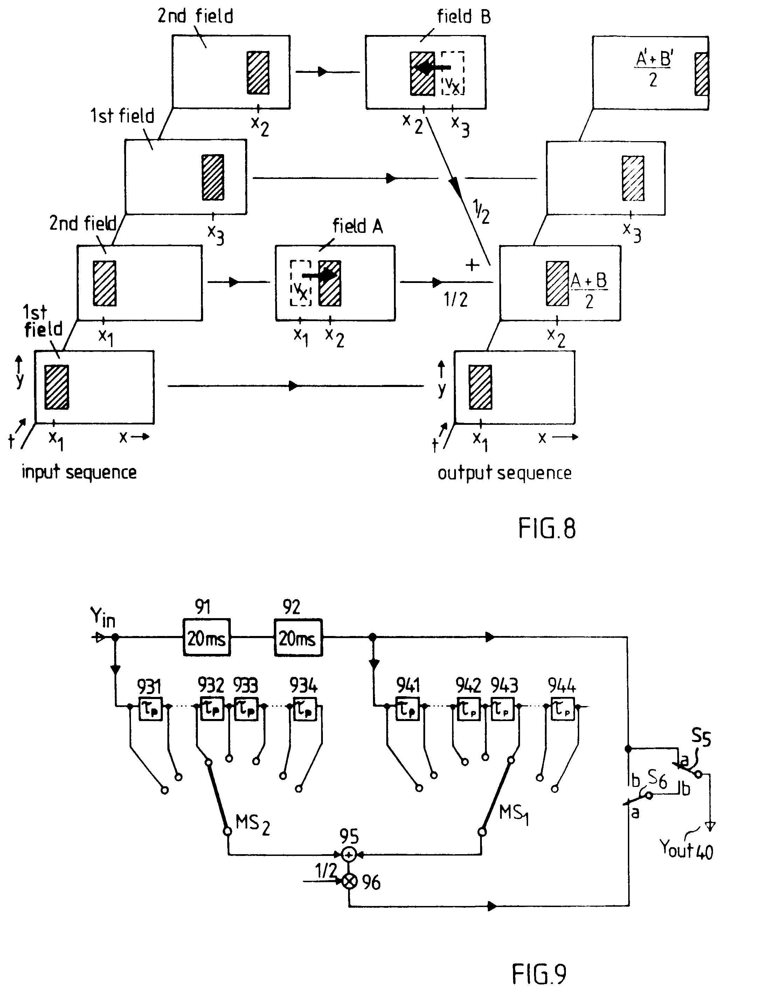

To avoid at least motion judder in horizontal direction, which is dominant in natural scenes, a motion vector adaptive interpolation should be carried out. For that purpose, first the picture elements within the actual second field are shifted according to its corresponding horizontal motion vector to generate the field A as depicted in Fig. 8. In the succeeding second field the picture elements are shifted in the negative direction in order to create the field B. The average of these fields A and B yields then a symmetrical motion vector adaptive interpolated field.

Fig. 9 shows a circuit for an according processing. This circuit contains two 20ms delay circuits 91 and 92. The horizontal shift operation only necessitates picture element delay circuits 931 to 934 and 941 to 944 and two motion vector controlled switches $MS_1$ and $MS_2$ which select the positive and negative shifted picture elements. These picture elements are averaged in the next stage, consisting of an adder 95 and a multiplier/shifter 96. Obviously, the first field needs not to be motion compensated, so the switch $S_5$ selects between the correct first field and the motion vector adaptive interpolated second field. Switch $S_6$ turns off the motion vector adaptive interpolation in case of the film mode, in which no motion vectors are transmitted.

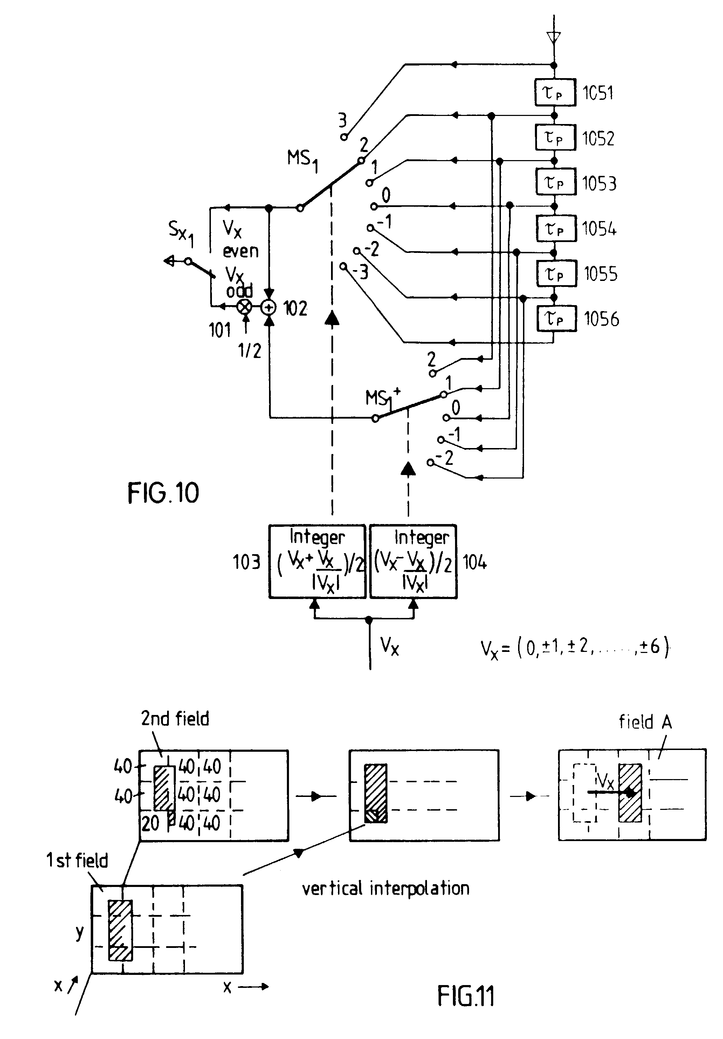

Since the maximum horizontal resolution of the luminance signal after standard D/D2-MAC decoding is halved compared with the resolution of the decoded HD-MAC signal, the motion vectors do have a half-pixel accuracy. For a reproduction of a horizontally moving edge with a smooth motion portrayal, the interpolation has to be carried out with subpixel accuracy. A horizontal average between two succeeding picture elements will already meet the requirement for a smooth motion portrayal. The horizontal shift circuit (HSC) shown in Fig. 10, which follows the interpolation circuit of Fig. 9, contains therefore a certain number of picture element delay circuits 1051 to 1056, a second motion vector controlled switch for access of an adjacent picture element, an adder 102 and a multiplier/shifter 101. Two look-up table circuits 103 and 104 are fed with the incoming horizontal motion vectors $V_x$ and provide an output according to the following formulas:

$$(V_x+V_x/|V_x|)/2 \text{ for the position of switch } MS_1;$$

$$(V_x-V_x/|V_x|)/2 \text{ for the position of switch } MS_1{}^+.$$

In Fig. 10 an example value $V_x = 3$ is used. In this case the picture elements horizontally shifted by 1.5 with respect to the normal definition are selected by a switch $S_{mc1}$.

It cannot always be guaranteed that for a block of picture elements, which is located at the same position within the second field (field B) of a frame the picture signal is also transmitted within the 40ms mode as was assumed for Fig. 8. If such a picture element block is transmitted within the 20ms mode it will represent a wrong motion phase and the motion vector adaptive interpolation will fail. For that reason, the picture information from the foregoing first field of the frame must be taken by using a vertical interpolation. Also a part of the horizontally shifted picture elements within the first field (field A) of the next frame can be transmitted within the 20ms mode. Here again these picture elements have to be replaced by picture elements taken from the preceeding first field by using a vertical interpolation.

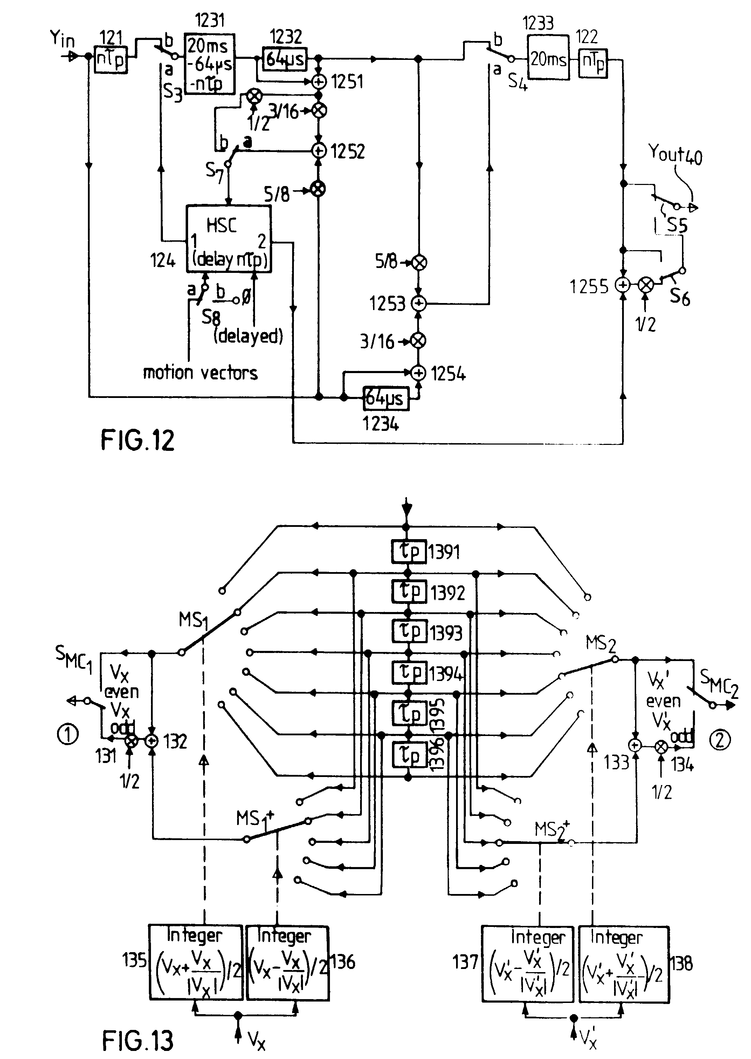

Fig. 11 gives an example for this situation. The lower left hand corner of the moving object is transmitted within the 20ms mode. After vertical interpolation and horizontal shifting this corner appears in field A within a 40ms block. Consequently, for a correct motion vector adaptive interpolation in horizontal direction, an accessing to four different fields is necessary. In order to keep the number of the required field stores as small as possible, the motion vector adaptive processing is splitted into two succeeding operations with a temporal distance of 40ms between each other.

Fig. 12 shows an according circuit for this signal processing. This circuit contains multipliers/shifters with coefficients 1/2, 3/16 and 5/8, adders 1251 to 1255 and delay circuits 121, 123 and 1231 to 1234 which have respective delay times of $nT_p$, $nT_p$, 20ms-64µs-$nT_p$, 64µs, 20ms and 64µs $T_p$ is the delay time (clock) e.g. of the delay circuits 1051 to 1056 of Fig. 10. The value n corresponds to the maximum number of ± delays, e. g. n = 3 in Fig. 10. Switch $S_7$ selects between the signal coming from the second field in case of a 40ms mode transmission and a vertically interpolated signal coming from the previous first field. The signal is then fed into the motion vector controlled horizontal shift circuit (HSC) 124. Output 1 of the HSC represents the shifted picture information with respect to the field $A_{next}$ for the next second field to be interpolated, whereas output 2 of the HSC provides the shifted picture information with respect to the field B for the actual second field (see Fig. 8). In case of film mode it has to be guaranteed that for field A no horizontal shift is carried out. $V_{x\,next}$ must therefore be set to zero. Switch $S_8$ will do that. The horizontal motion vector adaptive interpolation is combined with the vertical filtering, which is always active within the 40ms mode.

Fig. 13 shows the details of the motion vector controlled HSC 124 for two fields. Its function is similar to the function of the HSC of Fig. 10. Here the picture element delay circuits 1391 to 1396 are utilized for the actual and the next shift operation.

The HSC contains six motion vector controlled switches $MS_1$, $MS_1{}^+$, $MS_2$, $MS_2{}^+$, $S_{MC1}$, $S_{MC2}$, two adders 132 and 133 and two multipliers/shifters 131 and 132. Four look-up table circuits 135 to 138 are fed with the incoming horizontal motion vectors $V_x$ and $V_x'$.

CI, 20ms mode:

Although line shuffling is applied also within the 20ms mode, there are no significant distortions visible at the standard receiver. This is due to the reduced resolution caused by the temporal integration of the pick up tube and due to the application of this transmission mode only to high velocities or uncorrelated movements. On that account, no compatibility improvement should be implemented for the 20ms mode.

CI filter:

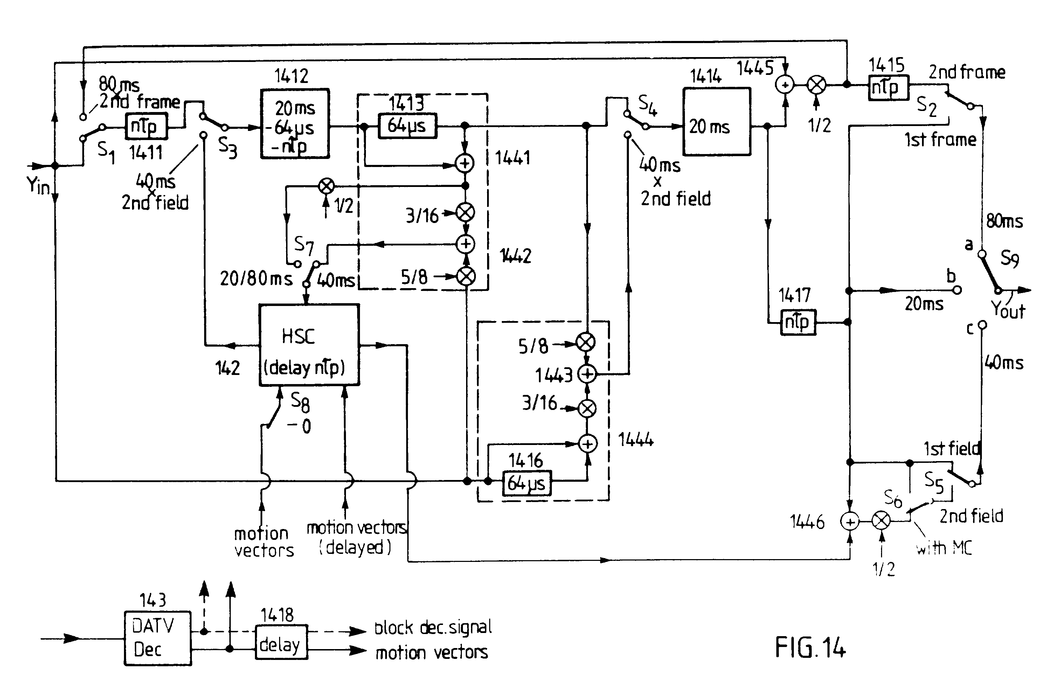

Fig. 14 shows the processing of the complete CI filter for the interlace signal. This block diagram is derived from the block diagram of Fig. 12. The circuit contains multipliers/shifters with coefficients 1/2, 3/16 and 5/8, adders 1441 to 1446 and delay circuits 1411 to 1417 which have respective delay times of $nT_p$, 20ms-64μs-$nT_p$, 64μs, 20ms, $nT_p$, 64μs and $nT_p$. Delay circuit 1418 supplies e.g. the look-up table circuits within HSC 142 with the appropriate motion vectors. Motion vectors and transmission modes are decoded within DATV decoder 143.
Switches $S_1$ to $S_8$ correspond (like switches within other figures) to the according switches including their functions of the figures described before.
Switch $S_9$ selects between the different mode signals according to the decision signal supplied by the DATV decoder. For interlace reproduction the introduced half line delay within the first field must be compensated to achieve a proper interlace signal.

Processing within the upconversion unit:

A progressive upconversion makes it necessary to interpolate the missing fields. This means that the second field belonging to the first motion phase and the first field corresponding to the second motion phase have to be calculated with respect to the interlace signal of the CI filter output. The terms 'first motion phase' and 'second motion phase', respectively, refer to the position of the moving objects within the first or second field which were available in the original sequence picked up by the HDTV camera.
In order to utilize the vertical resolution possible within the 40ms mode (synth. interlace) and also to apply a horizontal motion vector adaptive interpolation of the first field for the second motion phase, the upconversion unit should be combined with the CI filter to minimize the number of field stores necessary for the processing.

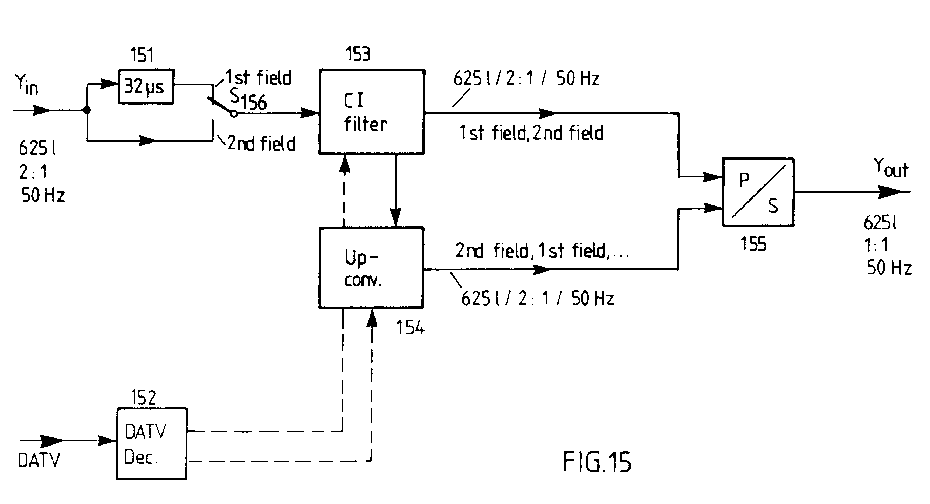

Fig. 15 shows the arrangement of the combined CI and upconversion unit. Both interlace output signals from CI filter 153 and upconversion unit 154 are fed into a parallel/serial converter 155 to create a sequential video signal (625 lines, 1:1, 50 Hz) with a 32μs line duration. The CI and the upconversion unit will be controlled by the DATV information supplied by DATV decoder 152. A delay circuit 151 provides an appropriate delay time of 32μs. The position of witch $S_{156}$ changes after each field.

80ms mode:

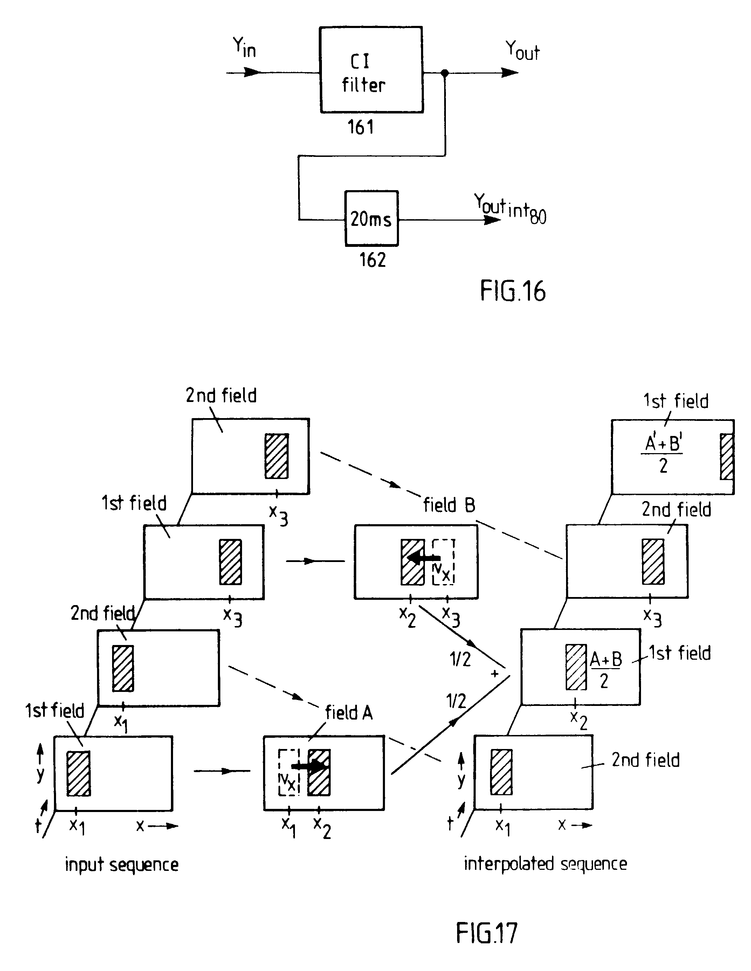

Because of the temporal filtering between the first and the third field (see Fig. 2) the succeeding second field is not yet temporally filtered. To generate nevertheless a full frame, the information of the preceding field will be simply repeated. This necessitates an additional field store 162 (field insertion) at the output of CI filter 161 as is depicted in Fig. 16.

40ms mode:

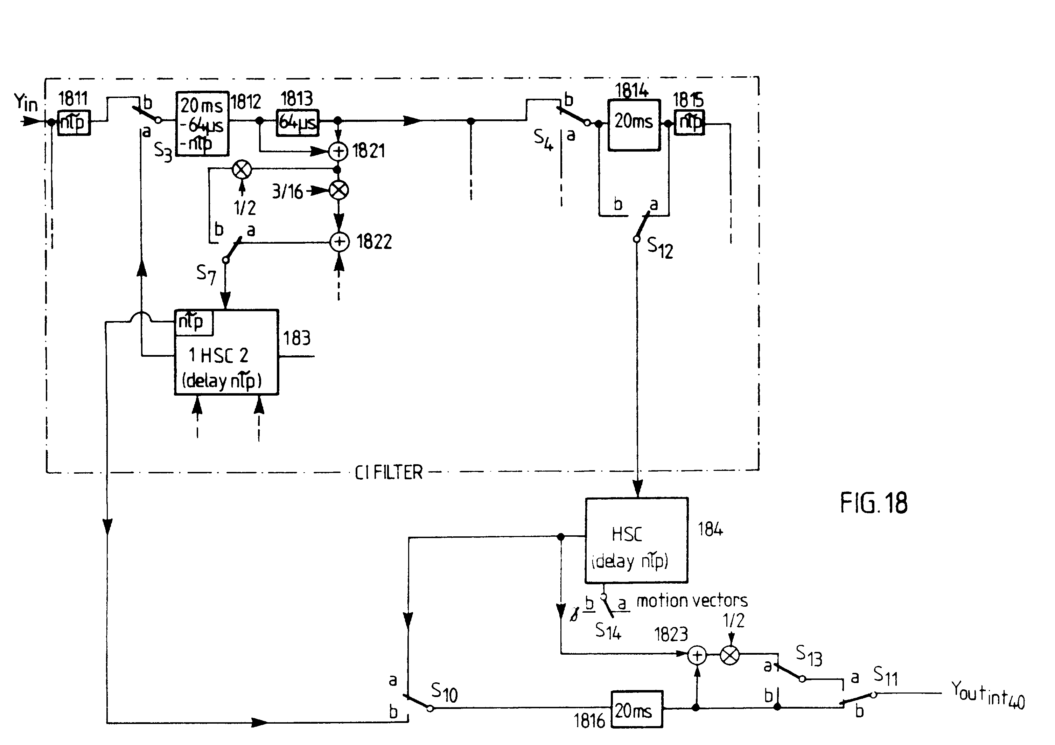

Within the 40ms mode the already vertically filtered but not yet motion vector adaptive interpolated second field can be taken to create a full frame of the first motion phase. Subsequently, 20ms later, for the full frame of the second motion phase also a horizontal motion vector adaptive interpolation of the first field has to be carried out. Fig. 17 illustrates this processing, which is very similar to the processing already described in Fig. 8.
Here again, the motion vector adaptive interpolation is split into two temporally succeeding operations. This enables the use of only one additional motion vector controlled HSC 184. The corresponding signal processing is depicted in Fig. 18. This circuit contains multipliers/shifters with coefficients 1/2, 3/16 and 5/8, adders 1821 to 1823 and delay circuits 1811 to 1816 which have respective delay times of $nT_p$, 20ms-64μs-$nT_p$, 64μs, 20ms, $nT_p$ and 20ms. The circuit inside the dashed line corresponds to Fig. 14.
For the second field used for the first motion phase, the output of the first HSC 183 with a constant delay time $nT_p$ is taken. Then the second field is delayed by the same field store 1816 used for the 80ms mode to appear at the output of the upconversion unit simultaneously with the first field at the CI filter output. The switches $S_{10}$ and $S_{11}$ select between the first and second field to be passed through the field store in a field alternating way. Concerning the motion vector adaptive interpolation of the first field of the second motion phase, at first, field A according to Fig. 17 is generated and fed into the field store. For that reason the switch $S_{12}$ selects the first field at the output of the CI filter. 20ms later, the field B will be calculated and averaged with the output signal of the field store.
The switches $S_{13}$ and $S_{14}$ are used for the film mode in which no motion vectors are transmitted and consequently no motion vector adaptive interpolation should be applied. The second generated frame represents then exactly the same motion phase as the first frame.

20ms mode:

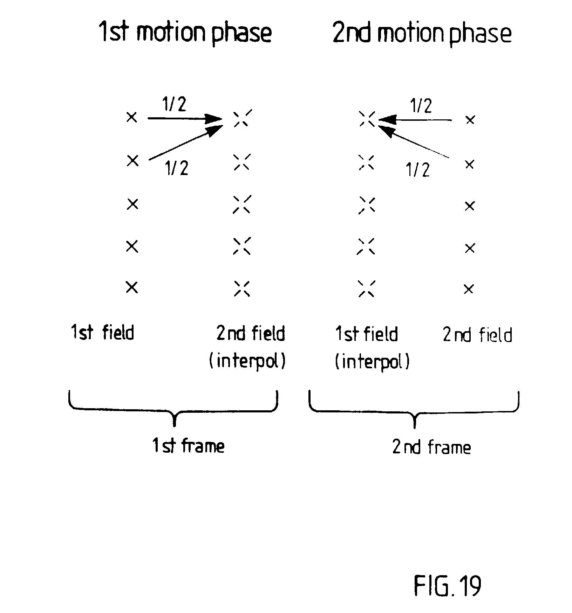

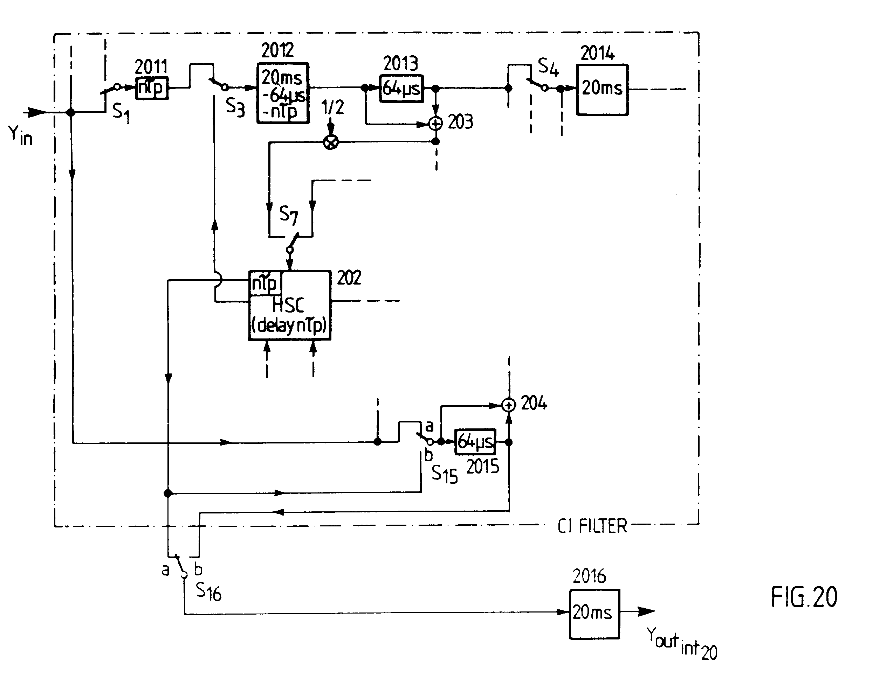

Fig. 20 gives the processing for the vertical upconversion. This circuit contains multipliers/shifters with coefficients 1/2, 3/16 and 5/8, adders 203 and 204 and delay circuits 2011 to 2016 which have respective delay times of $nT_p$, 20ms-64µs-$nT_p$, 64µs, 20ms, 64µs and 20ms. The circuit inside the dashed line corresponds to Fig. 14. Within the 20ms mode, a simple line averaging is used to create the missing lines. For that reason, the vertically interpolated signal already available at switch $S_7$ is used. The interpolated lines with respect to the first full frame are at the right vertical position (see Fig. 19), whereas the interpolated lines of the second full frame must be delayed by one line by means of the other line delay 2015 (i.e. delay circuit 1416 of Fig. 14) available within the second part of the vertical filter used for the 40ms mode (switches $S_{15}$ and $S_{16}$).

Upconversion unit:

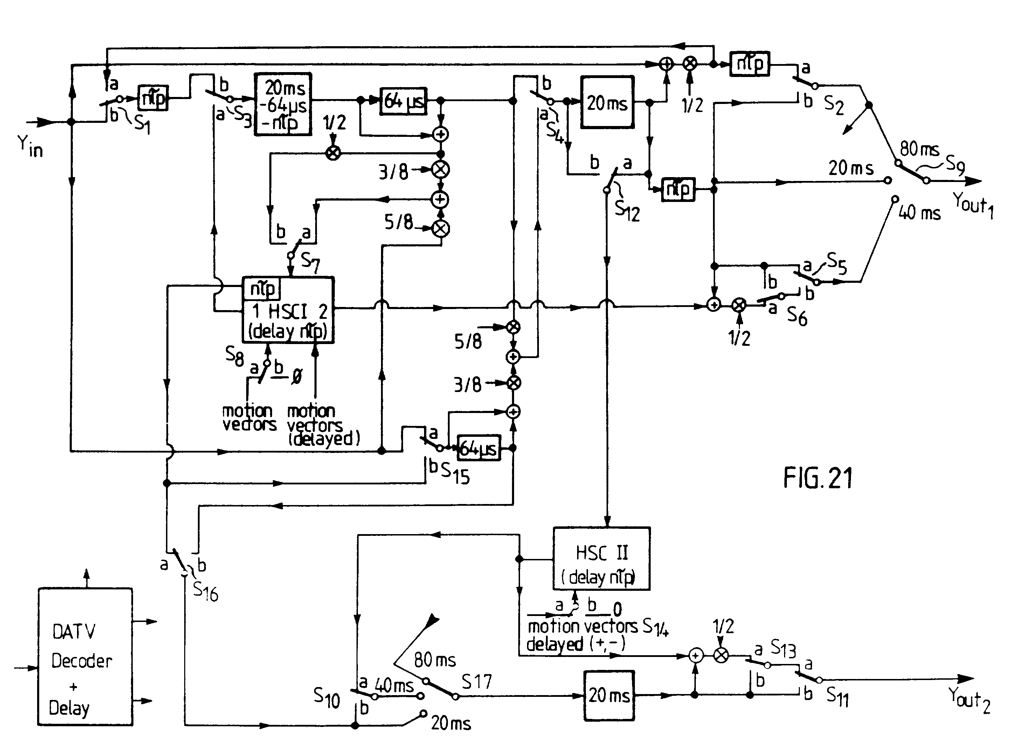

Finally the three different processing branches for the upconversion have to be combined and controlled by means of the DATV signal. Fig. 21 shows the whole processing of the CI and the upconversion unit. In this circuit it has to be guaranteed that the branch decision signals and the motion vectors supplied by the DATV decoder are in synchronization with the different processed signals to be controlled. This necessitates an appropriate delay of the decision signal and the motion vectors. This aspect has not been taken into account in Fig. 21.

Estimation of the spatial resolution of the CI filter including the progressive upconversion in comparison with standard D/D2-MAC:

Assumptions and remarks:

Since a comparison is difficult to make between the resolution of different display-standards (interlace/progressive) and the resolution of standard D/D2-MAC, a modulation transfer function (MTF) of the pick-up device (tube camera) with a modulation depth of 35% at nyquist frequency has been chosen.

By subjective tests it has been shown in literature that because of the line scanning the 'Kell' factor and due to the interlace scanning the 'interlace' factor should be taken into account. The resulting factor which reduces the vertical resolution amounts then approximately to 0.5. Consequently, the maximum vertical luminance resolution of the standard MAC system would be 144 c/ph.

On the other hand at least the Kell factor is disputed so that the MTF of a standard camera (625 lines, 2:1, 50 Hz) with respect to the vertical resolution of the D/D2-MAC system has to be interpreted carefully. To simplify the comparison, only purely horizontal and vertical frequency responses will be considered here. Because of the motion adaptivity of the HD-MAC signal, the resolution within the different transmission modes has to be regarded separately.

Horizontal resolution:

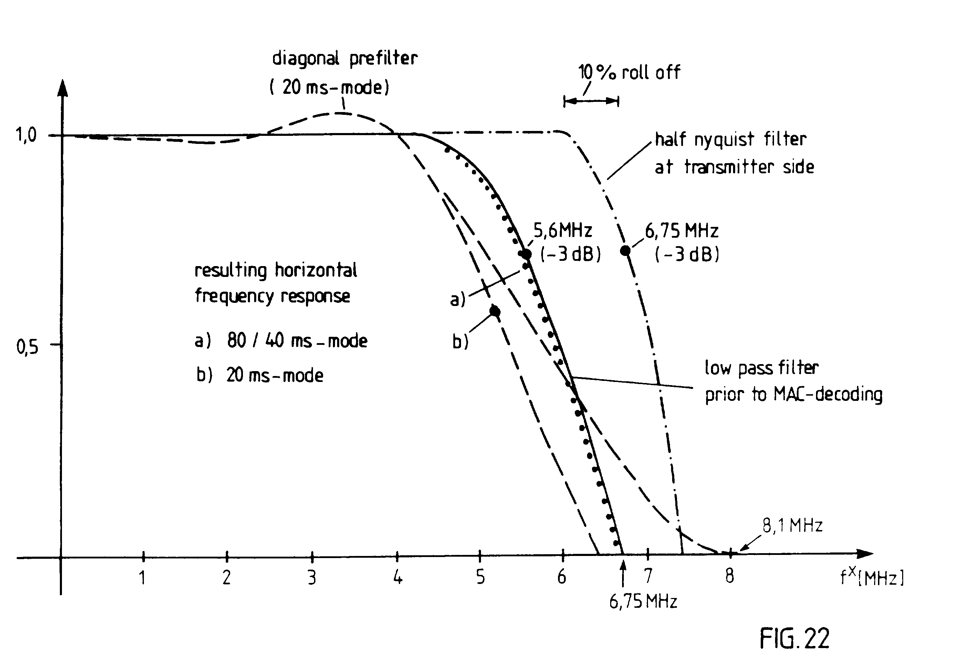

The processing of the CI filter takes places after standard D/D2-MAC decoding. Thereby the horizontal resolution will be determined by the standard D/D2-MAC resolution. Except in the 20ms mode there will arise a small resolution reduction due to the diagonal prefilter within the HDMAC encoder. Fig. 22 shows the most important horizontal frequency responses:

-.-.-.-.- half nyquist filter with a 10 % roll-off prior to FM modulation at transmitter side;

_____ horizontal lowpass filter with a -3 dB frequency at 8,4 MHz before standard MAC decoding;

- - - - - slice of the spatial frequency response of the diagonal prefilter (20ms mode) at $f^y = 0$;

......... resulting horizontal frequency response with in the

a) 80 and 40ms mode and b) 20ms mode

Vertical resolution:

The vertical resolution of the CI filter including the progressive upconversion is the result of different cascaded filter operations active within the different processing modes.

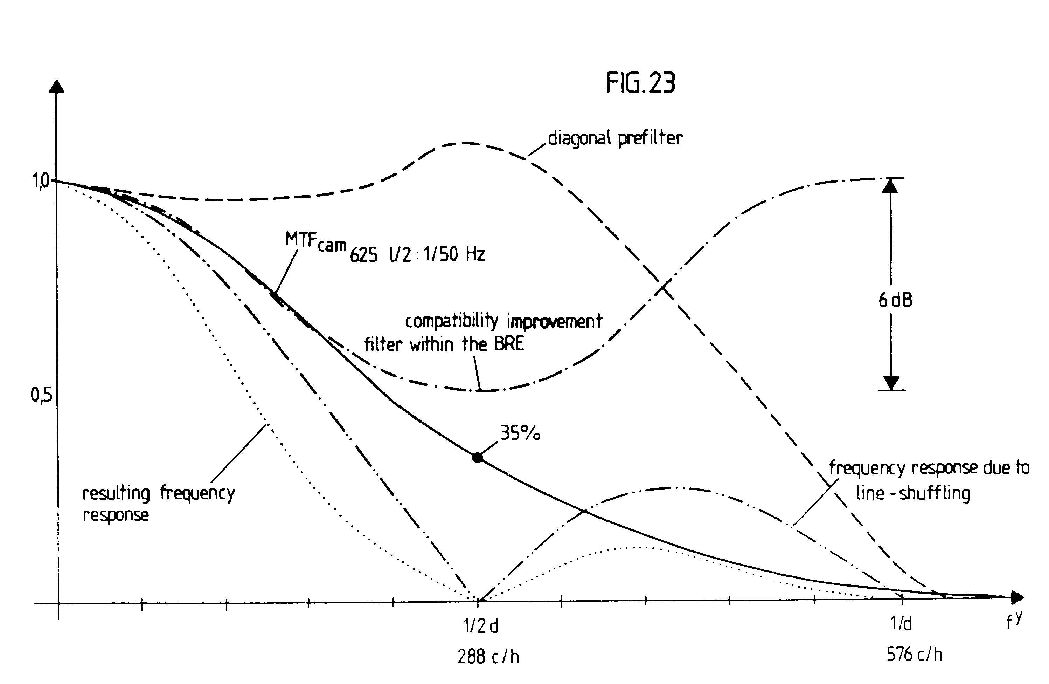

Fig. 23 shows the frequency responses which are active within the 80ms mode:

- - - - - diagonal prefilter within the HDMAC encoder (for the sake of simplicity the MTF of the HDTV pick-up device has been neglected);

-.-.-.-.- VCI* filter at transmitter side (-6 dB at 288 c/ph);

-..-..-.. frequency response due to line shuffling within the HDMAC encoder;

......... resulting frequency response of the upconverted signal.

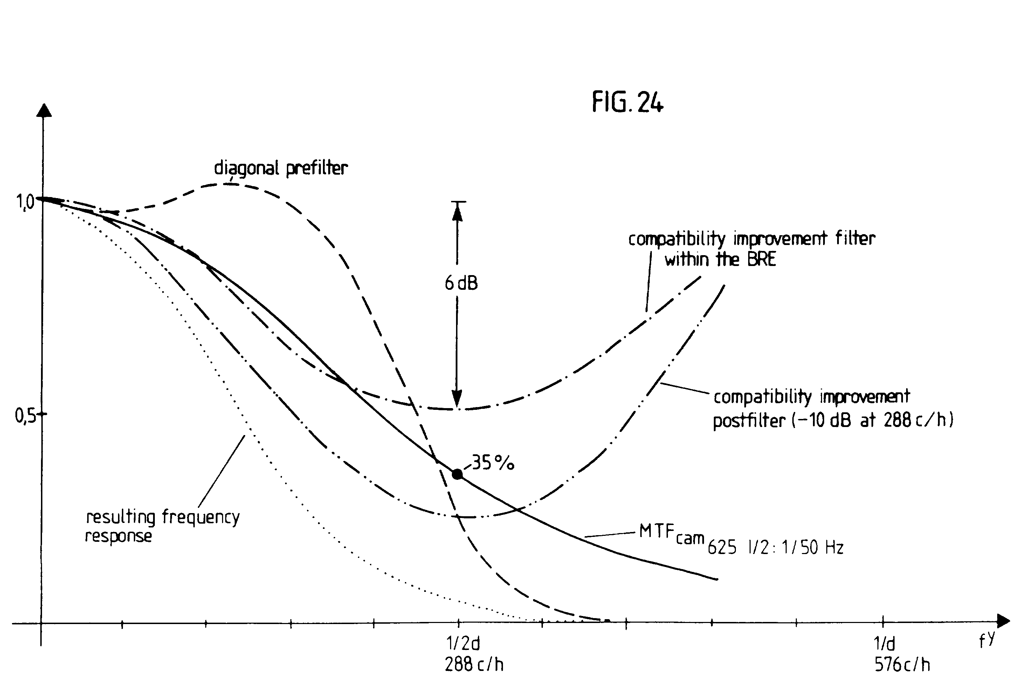

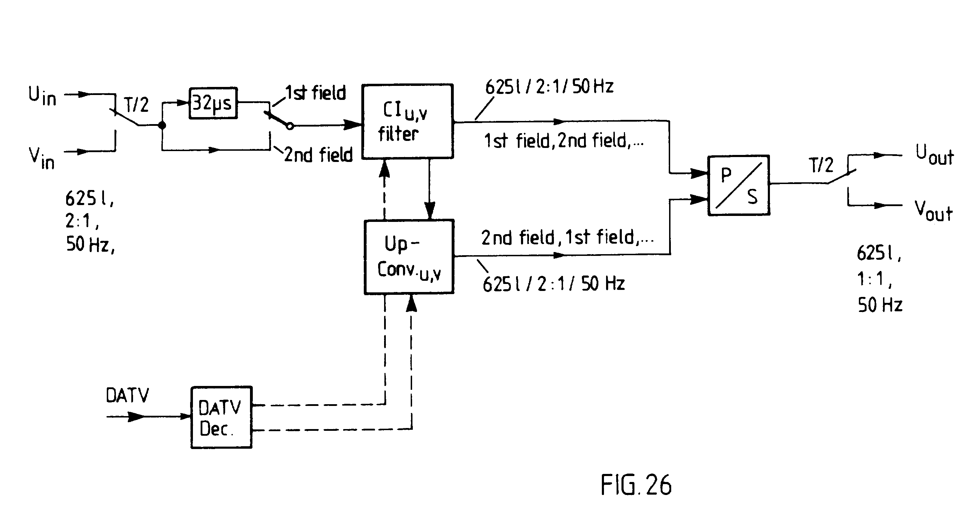

Fig. 24 gives the relevant frequency responses of the 40ms mode:

- - - - - diagonal prefilter within the HDMAC encoder;

-.-.-.-.- VCI filter at transmission side ** (-6 dB at 288 c/ph);

-..-..-.. CI filter (-10 dB at 288 c/h);

......... resulting frequency response of the upconverted signal.

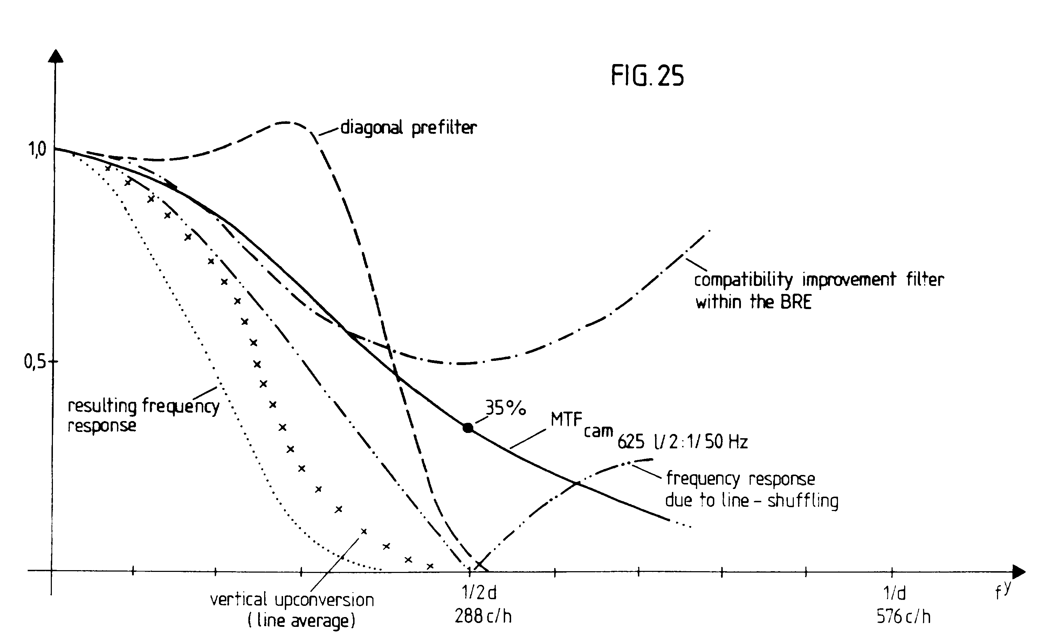

Fig. 25 illustrates the frequency responses within the 20ms mode:

- - - - - diagonal prefilter within the HDMAC encoder;

-.-.-.-.- VCI filter at transmitter side (-6 dB at 288 c/ph);

-..-..-.. frequency response due to line shuffling within the HDMAC encoder;

x x x x x vertical upconversion (line averaging);

*vertical compatibility improvement:

** This filter decreases the vertical resolution of the HD-MAC signal in order to reduce the interlace distortions at the standard receiver, but the distortions introduced by the quincunx sampling will not be influenced by this kind of filter.

......... resulting frequency response of the upconverted signal.

The impact of the described CI and upconversion processing on the picture quality has been extensively tested. As a main result, it can be summarized that the CI processed picture shows for the 80ms and 40ms mode a somehow reduced resolution in vertical direction compared with the unprocessed one. This is due to the fact that the 12.5 Hz artefacts within the 80ms mode appear as a pseudo definition which masks the lowpass filtering effect of the line shuffling. Within the 40ms mode the MCCI at the HDMAC encoder introduces in the second field a portion of the second motion phase in order to reduce the motion judder. Since the CI processing is frame based within this transmission mode, an additional vertical unsharpness will be introduced.

Concerning the upconversion, the reduction of vertical resolution and sharpness will become more obviously because the masking effect of the interlace artefacts will be dropped. The applied line averaging within the 20ms mode will also reduce the vertical resolution but the reduction is not as apparent as in the other modes. Advantageously the quality of the upconverted picture can be significantly improved if the MCCI at the HDMAC encoder is switched off.

Chrominance processing:

Although, generally, the distortions of the chrominance components do not have such a severe effect on the picture quality as the luminance components will have, it is still worthwhile improving the chrominance processing with the aim of a better total picture quality. With respect to the CI processing of the luminance, it is in any case necessary to compensate its processing delay time by introducing the same number of field stores within the chrominance signal path. Otherwise for moving objects the luminance and chrominance information would not appear simultaneously thus causing an unacceptable reproduction.

One important aspect for a CI processing of the chrominance components results from the violation of the constant luminance principle present in current TV systems. Due to the non-linearity of the display a 12.5 Hz chrominance flickering caused by the sampling structure of the HDMAC encoder within the 80ms mode appears for the viewer partly as a 12.5 Hz luminance flickering, whereas the 12.5 Hz chrominance flickering can be neglected because of the low temporal sensitivity of the human visual system. This argument holds even more for picture areas with highly saturated colours, especially if the luminance level is low. Then the behaviour of the visual system according to the law of Weber-Fechner will make this kind of distortion appear more disturbing. Furthermore the introduction of chrominance aliasing and the transmission of the chrominance components at the wrong local position with respect to its original one decreases the picture quality. The reproduced colour of detailed objects may appear for the viewer at the standard receiver separated by uncoloured lines (chrominance aliasing) or even displayed at an obviously wrong position. Nevertheless one will have to pay more attention to these facts in case of an upconversion when the masking effect of the interlace distortions will be dropped.

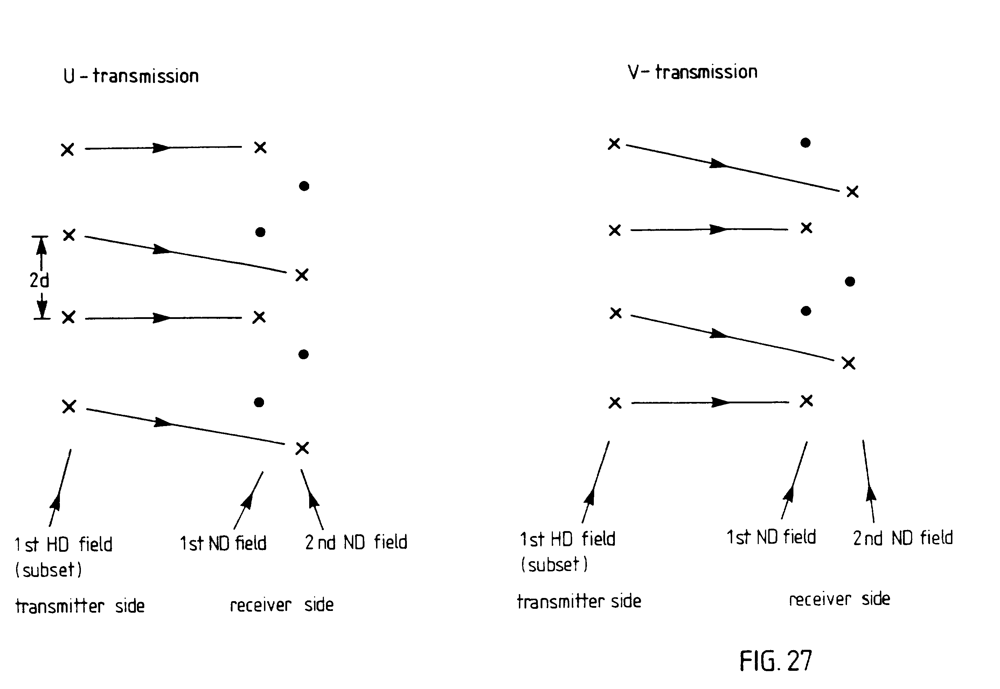

As stated before, the CI processing of the chrominance components will also be based on the U, V lines which are available after the standard D/D2-MAC decoding. Since the bandwidth of the chrominance is halved compared with the luminance, a multiplex between U and V with 6.75 MHz should be used so that only one CI processing and one upconversion unit for both, U and V is necessary. Also a half line delay for the first field of the input signal and one parallel/serial converter for the upconverted signal is assumed. Further the DATV signal is needed to control the chrominance processing. With respect to the 40ms mode of the luminance processing in the chrominance part for velocities greater than 3 pixel/20 ms the chrominance processing will be forced into the 20ms mode. Fig. 26 shows the arrangement of the processing units which correspond to the according units of Fig. 15.

CI filtering:

CI, 80ms mode:

For a complete suppression of the 12.5 Hz flickering the same temporal filter structure as for the luminance processing should be applied (see Fig.3). The removal of the remaining chrominance aliasing and the wrong position of the chrominance due to the line shuffling and 'line shifting' (explanation of this term see next section) would make necessary a far more complex hardware solution, which should not be considered here. For the time being, these kinds of distortion seem not to be a critical issue, since for a perception of such distortions the viewer needs a long observation time which is not really given within the 80ms mode for natural sequences. The HDMAC system changes to the 40ms mode very 'early', so that the probability of the occurence of the 80ms mode compared with the other modes is relatively small for natural scenes.

40ms mode:

The chrominance distortions due to the 'line shifting' within the 40ms mode appear very objectionable. Fig. 27 tries to illustrate this U, V processing done at the HDMAC encoder to fulfill the condition for a compatible U, V transmission within the MAC standard. Analogue to luminance processing the synthetic interlace is applied. The full chrominance resolution is given by the half number of lines of the first HD field, which correspond with the lines of the first field of the standard MAC scanning grid. In order to achieve a transmission within the standard MAC channel, each second line of the chrominance field will be conveyed with a distance d (line distance within the standard MAC system) to a vertically shifted position within the second field. The standard MAC receiver utilizes for its vertical interpolation only the lines available within one field by means of a 3-tap filter. Because of the halved line number, a chrominance aliasing will occur and because of the vertical shift within the second field the chrominance will also be displayed at the wrong vertical position.

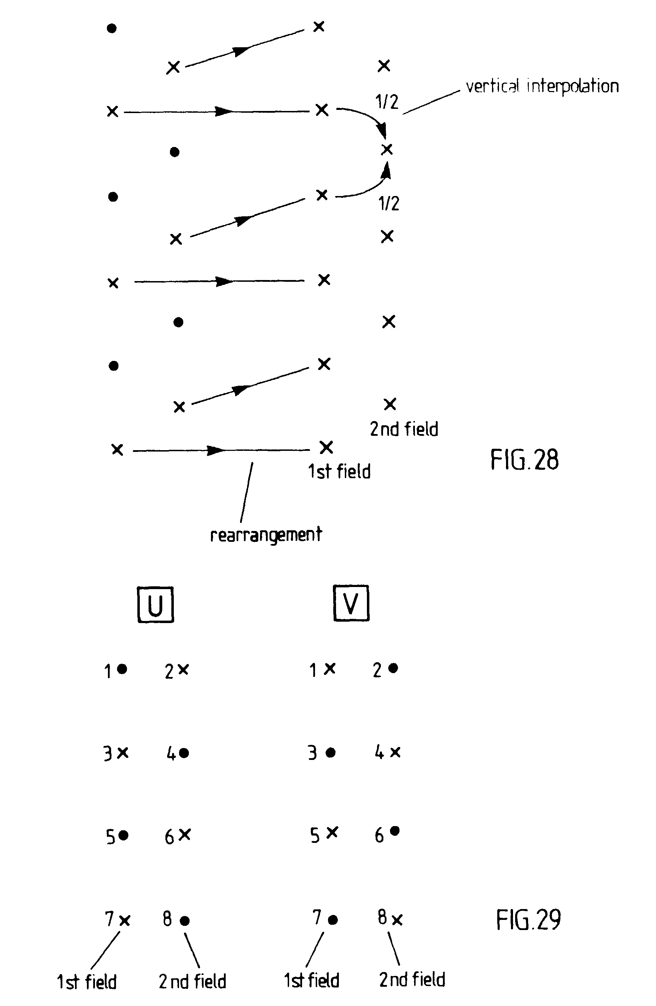

Within the 40ms mode the CI filter should therefore only take those lines for the processing which are not interpolated by the MAC decoder. For a compatible improvement the U and V lines will be rearranged at the right vertical-temporal position and the missing lines will be interpolated by vertical arranging. Since the first field will be completely given after rearranging, the second field has to be vertically interpolated by using the lines of the first field as is depicted in Fig. 28. Taking into consideration the hardware structure already outlined in Fig. 26, the U and V lines of the first and second field are available in the arrangement given in Fig. 29.

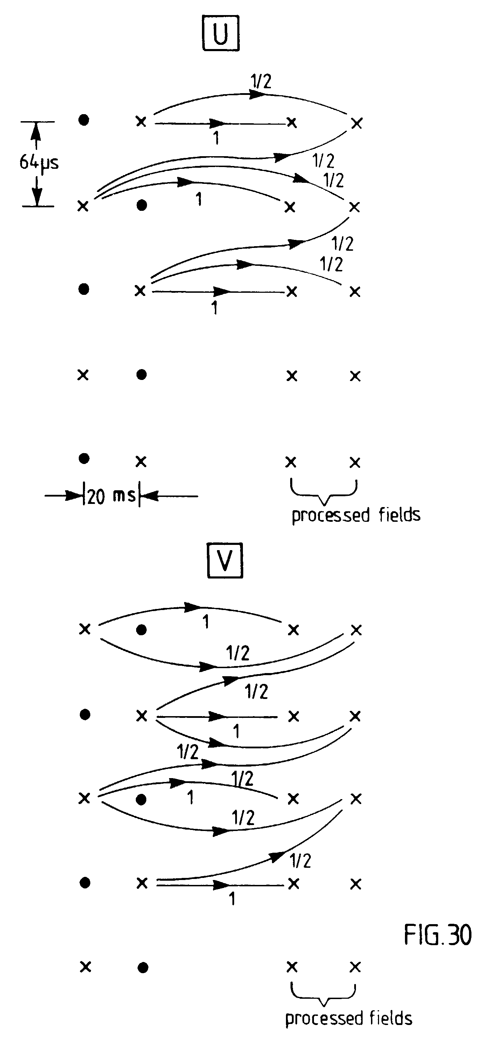

Regarding the rearrangement and the vertical interpolation of the U component first, Fig. 30 shows that for the lines to be interpolated within the second field in addition to the actually available line of the second field also an accessing to the line of the first field minus 64μs later is necessary. That corresponds with a temporal distance of 20 ms-64μs between both accessing points. Concerning the vertical interpolation of the V component within the second field in addition to the actually available line of the second field, here an accessing to the line of the first field plus 64μs earlier has to be done. In this case the temporal distance between both accessing points amounts 20ms+64μs.

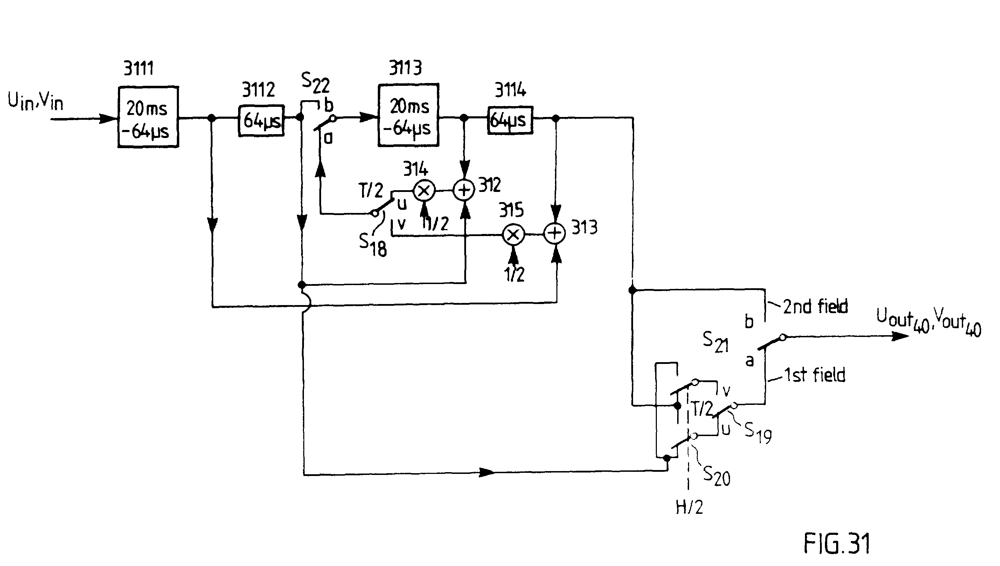

Fig. 31 illustrates the processing. This circuit contains multipliers/shifters with coefficients 1/2, adders 312 and 313 and delay circuits 3111 to 3114 which have respective delay times of 20ms-64μs, 64μs, 20ms-64μs and 64μs. Switch $S_{18}$ selects between the interpolated U and V lines of the second field according to the U, V multiplex. Switch $S_{19}$ will do the same for the rearranged lines by the switch $S_{20}$. Switch $S_{21}$ selects between the first and second field. Since the second field will be displayed 20ms later than the first field, the vertical interpolated values of the U and V lines have to be fed into the last field delay unit. Switch $S_{22}$ replaces the wrong U and V values within the 40ms mode by the correctly vertically interpolated ones.

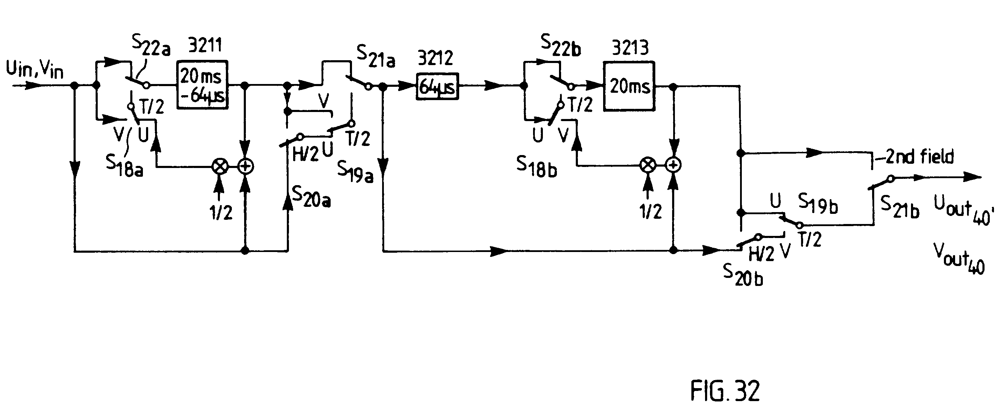

The same result can be achieved by a processing as is shown in Fig. 32 in which besides the two field delay units 3211 and 3213 only one line delay unit 3212 is needed. The U and V processing is temporally separated, that means at first the U rearrangement and vertical filtering is carried out (the according switches $S_{18a}$ to $S_{20a}$ are denoted by the subtitle a) followed by the V processing (switches $S_{18b}$ to $S_{20b}$ denoted by the subtitle b). Although this structure has the advantage of using one less line delay unit a doubled number of switches is necessary and the according control signal supplied by the DATV decoder has to be adapted separately.

20ms mode:

According to the reasons given in the section of the luminance processing there is no processing proposed for the chrominance components within the 20 ms mode.

CI filter:

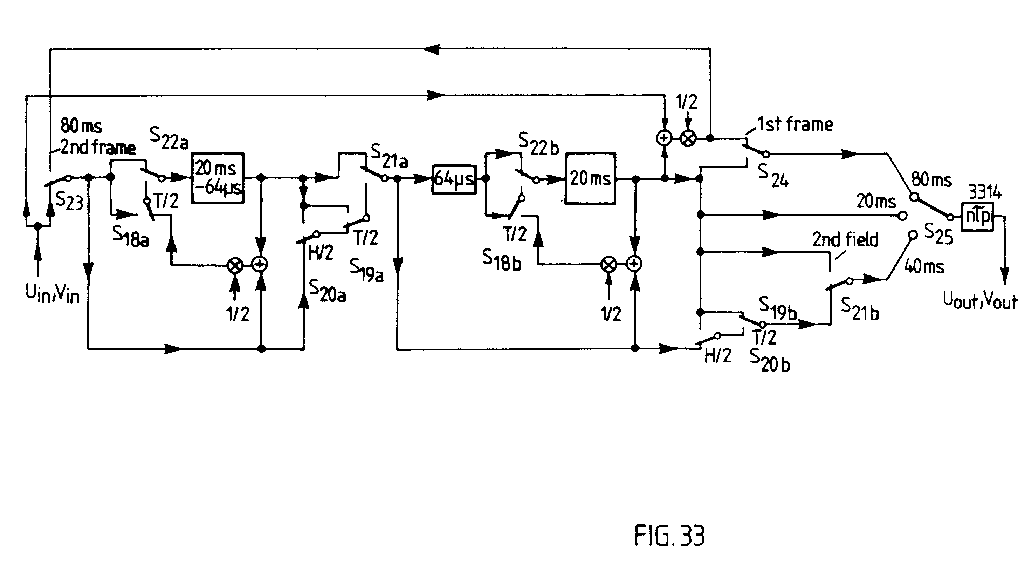

Fig. 33 illustrates the complete structure of the CI filter. For the 80ms mode branch two additional switches $S_{23}$ and $S_{24}$ are necessary (see also Fig. 3). Switch $S_{25}$ selects between the different processing branches. Because of the motion vector adaptive interpolation carried out within the luminance CI filtering an additional delay 3314 of $nT_p$ for the chrominance components has to be implemented.

Upconversion unit:

80ms mode:

For the same reason as stated in the respective section for the luminance processing a field insertion technique is used to interpolate the missing fields (see Fig. 16).

40ms mode:

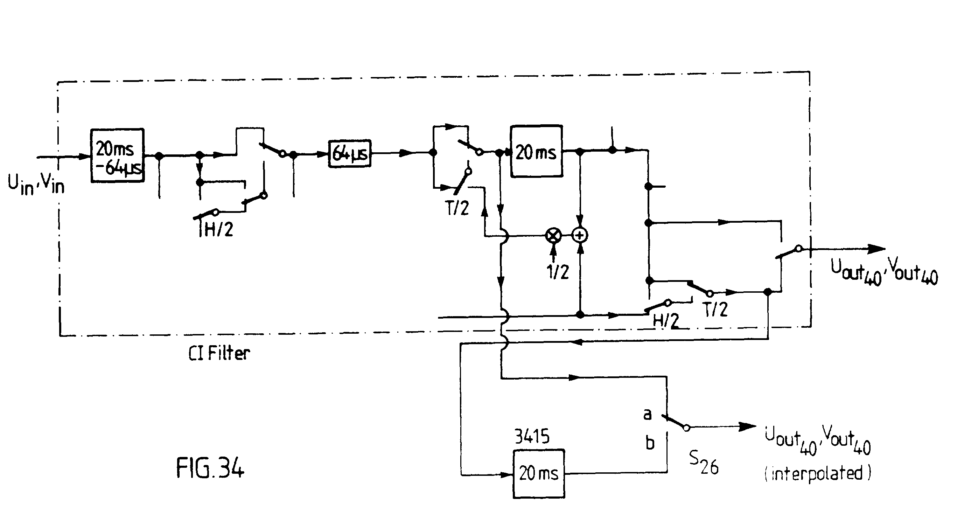

In order to utilize the vertical resolution possible by means of the synthetic interlace only those fields should be put together which stem out of the same motion phase. Afterwards the thus created full frame will be repeated. The achievable horizontal and vertical resolution is nearly the same as of the HDMAC reconstructed picture, since there is no quincunx sampling and diagonal pre- and postfiltering applied within the 40ms mode. Fig. 34 illustrates the processing. The actual first field at the output of the CI filter will be delayed by the additional field store 3415. Thereby switch $S_{26}$ selects for the first 20ms the second field which has already been vertical interpolated and which is then available at the output of switch $S_{26}$. 20ms later the delayed first field will be synchroneously available with the second field at the output of the CI filter.

20ms mode:

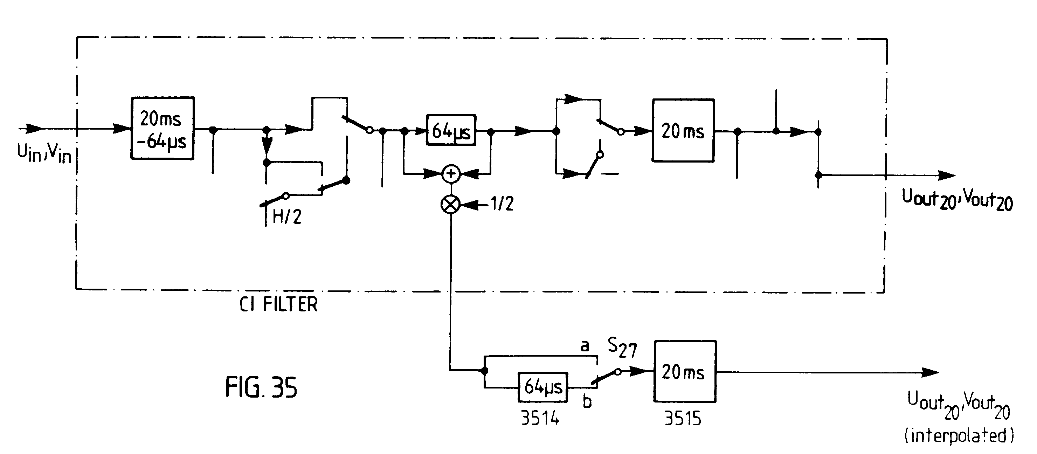

Within the 20ms mode a simple vertical interpolation (line averaging) is applied. For this purpose, a line delay 3514 within the field store chain is used for this interpolation as is shown in Fig. 35. To have the interpolated field simultaneously available with the CI processed one the vertical interpolated field has to be delayed by the field store 3515 and for the second field also has to be delayed by one line. $S_{27}$ selects the correct signal.

Upconversion unit:

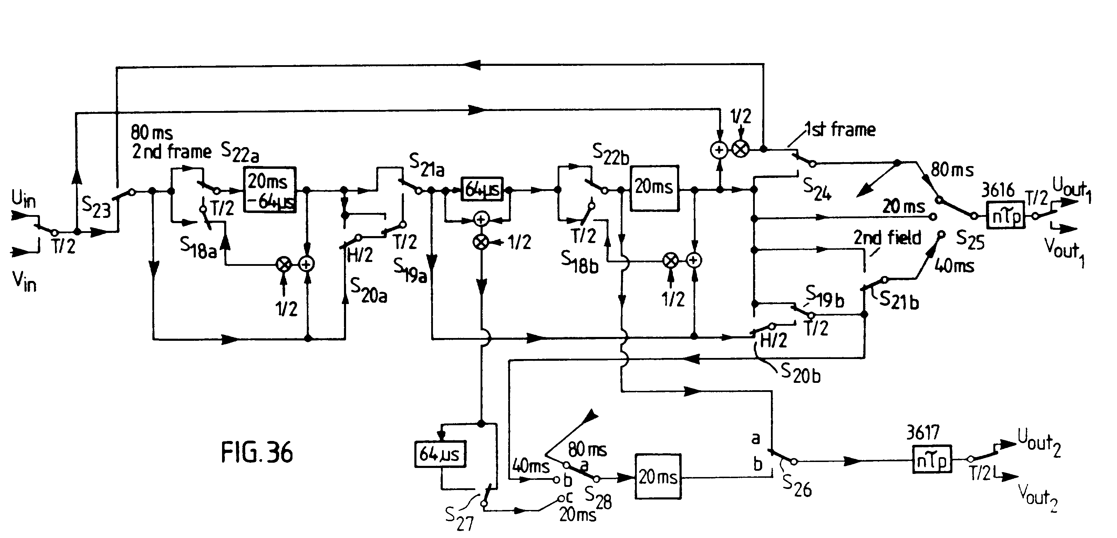

The whole processing of the upconversion in conjunction with the CI filter is represented in Fig. 36. Switch $S_{28}$ selects between the different processed signals which should be fed into the field store. The interpolated signal has also to be delayed by a time $nT_p$ in delay circuits 3616 and 3617 in order to be simultaneously with the output of the CI filter.

Improved quality of the upconverted signal by means of modified CI filter at the HDMAC encoder:

As already stated before, the CI filtering carried out at the HDMAC encoder reduces to some extent the distortions visible at the compatible receiver but also introduces further new complex distortions. It is therefore worthwhile to investigate a sensible CI filtering at the HDMAC encoder.

Within the 80ms mode no CI filter should be introduced which will reduce the vertical resolution of the compatible receiver. The actually proposed TCI (temporal compatibility improvement) filter of the HDMAC standard will have no effects on the vertical resolution. The maximum vertical resolution for the standard receiver is then given by the lowpass filtering effect due to the line shuffling, but even this resolution may seem not to be acceptable compared with the resolu tion possible within the D/D2-MAC standard. Further investigations with the aim of an improved vertical resolution for the standard receiver would be desirable.

As stated before, after suppression of any 12.5 Hz flickering artefacts by using a temporal filtering, still a 25 Hz vertical edge flickering remains. According to the analysis given in the above mentioned article the high horizontal frequency components which pass through the diagonal prefilter are responsible for this kind of distortion. If the frequency response of the diagonal prefilter will be modified in horizontal direction in order to enhance the resolution within the 80ms mode this artefact will be increased. This necessitates some countermeasurements. Assuming the worst case that the horizontal bandwidth is completely utilized by the prefilter, an attenuation of the upper half of the horizontal bandwidth (of the prefilter) between 7 or 10 dB will be necessary.

The 40ms mode plays an important role for the HDMAC quality, since the system remains most of the time within this mode. The MCCI active within this mode reduces to a certain extent the motion judder but also introduces new disturbing artefacts at moving edges. Furthermore it hinders a simple upconversion. Consequently, at least in countries in which no pure D/D2-MAC broadcasting will take place, the MCCI should be switched off. Instead of the introduced VCI (vertical compatibility improvement) filter of the HDMAC standard a HCI (horizontal compatibility improvement) filter should be used prior to the quincunx sampling at the encoder side. The high horizontal frequency components after the diagonal prefilter should be attenuated in order to avoid a 25 Hz flickering at vertical edges in case of an interlace reproduction or a disturbing teeth structure at vertical edges in case of a full frame reproduction. Then, for the upconverted signal the vertical filter of the proposed CI filter at standard receiver side can be switched off. The vertical resolution of the reconstructed picture will become equivalent to that of the HDMAC reconstructed one.

For the blocks located at the border of the TV picture there is only a restricted number of motion vectors available (border processing) so that the transmission mode of the HDMAC system is often forced into the 20ms mode. Under these circumstances, the conditions for which the 20ms mode should only be used are not fulfilled. For that reason it may happen that at least a part of a slow moving object with many details will be transmitted within the 20ms mode. Therefore some disturbing diagonal aliasing will come up in these blocks. In order to reduce this aliasing, the VCI filter within the HDMAC encoder should be modified and an additional DCI (diagonal compatibility improvement) should be introduced which can attenuate the high diagonal frequency components located within the first and third quadrant of the spatial frequency domain. This diagonal attenuation would have only a small influence on the signal-to-noise ratio of the HDMAC receiver as can be seen from the noise power spectrum given in the above mentioned article.

Functions of the switches within the CI filter and upconversion unit (luminance and chrominance):

$S_1$:

a, if $Y_{in}$ is within the 80ms mode and within the 2nd frame
b, otherwise

$S_2$:

a, if $Y_{in}$ is within the 2nd frame
b, otherwise

$S_3$:

a, if $Y_{in}$ is within the 40ms mode and within the 2nd field
b, otherwise

$S_4 = S_3$

$S_5$:

a, if $Y_{in}$ is within the 1st field
b, otherwise

$S_6$:

    a, with motion vector adaptive interpolation (camera mode)
    b, otherwise (film mode)

$S_7$:

    a, if applied picture signal is within the 40ms mode
    b, otherwise

$S_8 = S_6$

$S_9$:

    a, if 80ms mode
    b, if 20ms mode
    c, if 40ms mode

$S_{10}$:

    a, if $Y_{in}$ is within the 2nd field
    b, otherwise

$S_{11}$:

    a, if $Y_{in}$ is within the 2nd field and $Y_{out}$ is within the 40ms mode
    b, otherwise

$S_{12}$:

    a, if $Y_{in}$ is within the 1st field
    b, otherwise

$S_{13} = S_{14} = S_6$

$S_{15}$:

    a, if $Y_{in}$ is within the 2nd field
    b, otherwise

$S_{16}$:

    a, if $Y_{in}$ is within the 2nd field
    b, otherwise

$S_{17}$:

    a, if 80ms mode
    b, if 40ms mode
    c, if 20ms mode

$S_{18}$:
U/V multiplex with 6.75 MHz

$S_{19} = S_{18}$

$S_{19a,b}$:
U/V multiplex with 6.75 MHz

$S_{20}$:
switches with the half line frequency

$S_{20a,b}$:
see $S_{20}$

$S_{21}$:

    a, if $U_{in}$, $V_{in}$ are within the 1st field
    b, otherwise

$S_{22}$:

    a, if applied signal is within the 40ms mode and within the 2nd field
    b, otherwise

$S_{22a}$:
see $S_{22}$ only for U

$S_{22b}$:
see $S_{22}$ only for V

$S_{23}$:
see $S_1$ but here for $U_{in}$, $V_{in}$

$S_{24}$:
see $S_2$ but here for $U_{in}$, $V_{in}$

$S_{25}$:

    a, if 80ms mode
    b, if 20ms mode
    c, if 40ms mode

$S_{26}$:

    a, if $U_{in}$, $V_{in}$ within the 1st field and within the 40ms mode
    b, otherwise

$S_{27}$:

    a, if $U_{in}$, $V_{in}$ within the 2nd field
    b, otherwise

$S_{28}$:

    a, if 80ms mode
    b, if 40ms mode
    c, if 20ms mode

## Claims

1. Compatibility improvement apparatus for the use within a video signal transmission and/or recording system, where a video signal with a first definition is transmitted and/or recorded with reduced data rate in a compatible manner with a second and lower definition, and where different modes of transmission and/or recording are used, whereby said modes are in principle derived from the velocity of the picture content or of parts of the picture content of said video signal and said video signal is described by luminance and chrominance pixels, **characterized in** that said apparatus is used when decoding with said second definition said video signal and that said apparatus comprises input means receiving said video signal decoded with said second definition and one or more of the following means for improving the compatability:

    - first means for suppressing temporal luminance and/or chrominance frequencies of said video signal in the range of a quarter of the field frequency of said video signal, e.g. a temporal filter;
    - second means for supressing vertical and/or horizontal luminance frequencies of said video signal in the range of one half of said field frequency;
    - third means for vertical lowpass filtering of luminance pixels within frames of said video signal;
    - fourth means for a nonlinear and motion adaptive interpolation of luminance pixels;
    - fifth means for a vertical and/or temporal rearranging and interpolation of chrominance pixels, whereby only such pixels are used for said interpolation which have not been interpolated before said transmission and/or recording.

2. Apparatus according to claim 1, **characterized in** that three of said modes are used when an encoding with said first definition of said video signal is carried out, whereby the first mode is a static mode and the second mode is a slow motion mode and the third mode is a fast motion mode.

3. Apparatus according to claim 2, **characterized in** that in said first mode four successive fields (Fig. 2) and in said second mode two successive fields (Fig. 6) of said video signal are processed together and that in said third mode each field is processed separately, when said encoding with said first definition is carried out.

4. Apparatus according to one of claims 1 to 3, **characterized in** that transmitted and/or recorded motion vectors are evaluated (103, 104, 124, 135 to 138, 142, 183, 184, 202) for said decoding with said second definition.

5. Apparatus according to one or more of claims 1 to 4, **characterized in** that said video signal with said first definition is a HDMAC signal and that said video signal with said second definition is a MAC signal, e.g. a D2-MAC signal.

6. Apparatus according to one or more of claims 1 to 5, **characterized in** that said first means (Fig. 3) generate output signals ($Yout_{80}$, $Uout_{80}$, $Vout_{80}$) from said video signal if transmitted and/or recorded with said first mode, whereby either the first and the third or the second and the fourth of said fields are input for the processing.

7. Apparatus according to one or more of claims 1 to 6, **characterized in** that said third means delay the pixels of every second of the fields by one half of a line period (Fig. 5).

8. Apparatus according to claim 7, **characterized in** that said third and fourth means are combined (Fig. 12) and generate output signals ($Yout_{40}$) from said video signal if transmitted and/or recorded with said second mode.

9. Apparatus according to claim 8, **characterized in** that said combined means comprise a horizontal shift circuit (Fig. 10, Fig. 13) which is controlled by said motion vectors ($V_x$, $V_x'$).

10. Apparatus according to claim 9, **characterized in** that said controlling is performed by using look-up table circuits (103, 104, 135 to 138).

11. Apparatus according to one or more of claims 1 to 10, **characterized in** that said means generate progressive output signals ($Yout_1$ and $Yout_2$ in Fig. 21, $Uout_1$, $Uout_2$, $Vout_1$ and $Vout_2$ in Fig. 36) and comprise further means, e.g. field and line delay circuits, horizontal shift circuits and switches, (162 in Fig. 16; 184, 1816, 1823 $S_{10}$, $S_{13}$, $S_{11}$ in Fig. 18; 2016 and $S_{16}$ in Fig. 20; 3415 and $S_{26}^*$ in Fig. 34; 3514, $S_{27}$ and 3515 in Fig. 35) for vertical interpolation of lines.

12. Apparatus according to claim 11, **characterized in** that the luminance pixels of said progressive output signals are horizontally motion vector adaptive interpolated if said video signal is transmitted and/or recorded with said second mode, whereby only pixels from fields having an equal motion phase are used as input signal.

13. Apparatus according to claim 1 and/or 12, **characterized in** that said motion adaptive interpolation is carried out by matching two motion interpolated fields (Fig. 8, Fig. 17).

**Patentansprüche**

1. Gerät zur Verbesserung der Kompatibilität für die Verwendung in einem Videosignal-Übertragungs- und/oder Aufzeichnungssystem, bei dem ein Videosignal mit einer ersten Auflösung in kompatibler Weise mit verminderte Daten-Rate mit einer zweiten und niedrigeren Auflösung übertragen und/oder aufgezeichnet wird, und bei dem verschiedene Betriebsarten der Übertragung und/oder Aufzeichnung verwendet werden, wobei die Betriebsarten im Prinzip von der Geschwindigkeit des Bildinhalts oder von Teilen des Bildinhalts des Videosignals abgeleitet werden und das Videosignal durch Luminanz- und Chrominanz-Pixel beschrieben wird, dadurch gekennzeichnet, daß das Gerät beim Dekodieren des Videosignals mit der zweiten Auflösung verwendet wird, und daß das Gerät Eingangsmittel zum Empfang des mit der zweiten Auflösung dekodierten Signals und ein oder mehrere der folgenden Mittel zur Verbesserung der Kompatibilität enthält:

   - erste Mittel zur Unterdrückung zeitlicher Luminanz- und/oder Chrominanzfrequenzen des Videosignals im Bereich eines Viertels der Halbbild-Frequenz des Videosignals, z.B. ein zeitliches Filter;
   - zweite Mittel zur Unterdrückung von Vertikal- und/oder Horizontal-Luminanzfrequenzen des Videosignals im Bereich der Hälfte der Halbbild-Frequenz;
   - dritte Mittel für Vertikal-Tiefpaßfilterung der Luminanz-Pixel in Vollbildern des Videosignals;
   - vierte Mittel für eine nicht-lineare und bewegungsadaptive Interpolation von Luminanz-Pixeln;
   - fünfte Mittel für eine Vertikal- und/oder zeitliche Neuordnung und Interpolation von Chrominanz-Pixeln, wobei für die Interpolation nur solche Pixel verwendet werden, die nicht vor der Übertragung und/oder Aufzeichnung interpoliert worden sind.

2. Gerät nach Anspruch 1, dadurch gekennzeichnet, daß drei der Betriebsarten verwendet werden, wenn eine Kodierung mit der ersten Auflösung des Videosignals ausgeführt wird, wobei die erste Betriebsart eine statische Betriebsart und die zweite Betriebsart eine Zeitlupen-Betriebsart und die dritte Betriebsart eine Zeitraffer-Betriebsart ist.

3. Gerät nach Anspruch 2, dadurch gekennzeichnet, daß in der ersten Betriebsart vier aufeinanderfolgende Halbbilder (Fig. 2) und in der zweiten Betriebsart zwei aufeinanderfolgende Halbbilder (Fig. 6) des Videosignals zusammen verarbeitet werden, und daß in der dritten Betriebsart jedes Halbbild getrennt verarbeitet wird, wenn die Kodierung mit der ersten Auflösung ausgeführt wird.

4. Gerät nach einem der Ansprüche 1 bis 3, dadurch gekennzeichnet, daß übertragene und/oder aufgezeichnete Bewegungsvektoren für die Dekodierung mit der zweiten Auflösung ausgewertet werden.

5. Gerät nach einem der mehreren der Ansprüche 1 bis 4, dadurch gekennzeichnet, daß das Videosignal mit der ersten Auflösung ein HDMAC-Signal und das Videosignal mit der zweiten Auflösung ein MAC-Signal, z.B. ein D2-MAC-Signal ist.

6. Gerät nach einem oder mehreren der Ansprüche 1 bis 5, dadurch gekennzeichnet, daß die ersten Mittel (Fig. 3) Ausgangssignale ($Yout_{80}$, $Uout_{80}$, $Vout_{80}$) von dem Videosignal erzeugen, wenn es mit der ersten Betriebsart übertragen und/oder aufgezeichnet wird, wobei entweder das erste und dritte oder das zweite und vierte Halbbild für die Verarbeitung eingegeben werden.

7. Gerät nach einem oder mehreren der Ansprüche 1 bis 6, dadurch gekennzeichnet, daß die dritten Mittel die Pixel jedes zweiten Halbbildes um eine halbe Zeilenlänge verzögern (Fig. 5).

8. Gerät nach Anspruch 7, dadurch gekennzeichnet, daß die dritten und vierten Mittel kombiniert werden (Fig. 12) und Ausgangssignale ($Yout_{40}$) von dem Videosignal erzeugen, wenn es mit der zweiten Betriebsart übertragen und/oder aufgezeichnet wird.

9. Gerät nach Anspruch 8, dadurch gekennzeichnet, daß die kombinierten Mittel eine Horizontal-Schiebeschaltung (Fig. 10, Fig. 13) umfassen, die von den Bewegungs-Vektoren ($V_X$, $V_X'$) gesteuert wird.

10. Gerät nach Anspruch 9, dadurch gekennzeichnet, daß die Steuerung durch Verwendung von Nachschlage-Tabellen-Schaltungen (103, 104, 135 - 138) durchgeführt wird.

11. Gerät nach einem oder mehreren der Ansprüche 1 bis 10, dadurch gekennzeichnet, daß die Mittel progressive Ausgangssignale (Yout1 und $Yout_2$ in Fig. 21, $Uout_1$, $Uout_2$, $Vout_1$ und $Vout_2$ in Fig. 36) erzeugen, und daß weitere Mittel vorgesehen sind, z.B. Halbbild- und Zeilen-Verzögerungs-Schaltungen, Horizontal-Schiebeschaltungen und Schalter (162 in Fig. 16; 184, 1816, 1823, $S_{10}$, $S_{13}$, $S_{11}$ in Fig. 18; 2016 und $S_{16}$ in Fig. 20; 3415 und $S_{26}$ in Fig. 34; 3514, $S_{27}$ und 3515 in Fig. 35) für die Vertikal-Interpolation von Zeilen.

12. Gerät nach Anspruch 11, dadurch gekennzeichnet, daß die Luminanz-Pixel des progressiven Ausgangssignals horizontal bewegungsvektoradaptiv interpoliert werden, wenn das Videosignal in der zweiten Betriebsart übertragen und/oder aufgezeichnet wird, wobei nur Pixel von Halbbildern mit gleicher Bewegungsphase als Eingangssignal verwendet werden.

13. Gerät nach Anspruch 1 und/oder 12, dadurch gekennzeichnet, daß die bewegungsadaptive Interpolation durch Anpassung von zwei bewegungsinterpolierten Halbbildern (Fig. 8, Fig. 17) ausgeführt wird.

**Revendications**

1. Appareil destiné à améliorer la compatibilité, conçue pour un système de transmission et/ou d'enregistrement de signaux vidéo, où le signal vidéo dans une première définition est transmis et/ou enregistré avec un débit binaire réduit d'une manière compatible dans une deuxième définition (inférieure), et où les divers modes de transmission et/ou d'enregistrement sont utilisés, par lequel lesdits modes sont en principe dérivés de la vitesse du contenu de l'image ou de parties du contenu de l'image dudit signal vidéo et ledit signal vidéo est décrit par des pixels de luminance et de chrominance, caractérisé en ce que ledit appareil est utilisé lors du décodage dans ladite deuxième définition dudit signal vidéo et que ledit appareil intègre une entrée destinée à recevoir le signal d'entrée vidéo décodé à l'aide de ladite deuxième définition et un ou plusieurs des moyens suivants permettant d'améliorer la compatibilité :

- un premier moyen permettant de supprimer les fréquences de luminance et/ou chrominance temporaires dudit signal vidéo dans la plage d'un quart de la fréquence de trame dudit signal vidéo, par exemple, un filtre temporaire ;

- un deuxième moyen permettant de supprimer des fréquences de luminance verticale et/ou horizontale dudit signal vidéo dans la plage d'une moitié de ladite fréquence de trame ;

- un troisième moyen permettant le filtrage passe-bas vertical des pixels de luminance dans le cadre dudit signal vidéo ;

- un quatrième moyen permettant une interpolation adaptive à adaptation de mouvement non linéaire des pixels de luminance ;

- un cinquième moyen permettant l'interpolation et la transposition verticale et/ou temporaire des pixels de chrominance, par laquelle seuls les pixels non interpolés avant ladite transmission et/ou enregistrement, sont utilisés pour ladite interpolation.

2. Appareil conforme à la revendication 1, caractérisé en ce que trois desdits modes sont utilisés lors d'un codage dans ladite première définition dudit signal vidéo, par laquelle le premier mode est un mode statique, le deuxième mode un mode ralenti et le troisième mode un mode accéléré.

3. Appareil conforme à la revendication 2 caractérisé en ce que dans le premier mode, quatre champs successifs (Fig. 2) et dans le deuxième mode, deux champs successifs (Fig. 6) dudit signal vidéo sont traités ensemble et en ce que dans le troisième mode chaque champ est traité séparément lors du codage avec ladite première définition.

4. Appareil conforme aux revendications 1 à 3, caractérisé en ce que les vecteurs de mouvement transmis et/ou enregistrés sont évalués (103, 104, 124, 135 à 138, 142, 183, 194, 202) permettant ledit codage avec ladite deuxième définition.

5. Appareil conforme à une ou plusieurs des revendications 1 à 4, caractérisé en ce que ledit signal vidéo dans ladite première définition est un signal HDMAC et en ce que ledit signal dans la deuxième définition est un signal MAC, par exemple, un signal D2-MAC.

6. Appareil conforme à une ou plusieurs des réclamations 1 à 5, caractérisé en ce que le premier moyen (Fig. 3) permet de générer des signaux de sortie ($Yout_{80}$, $Uout_{80}$, $Vout_{80}$) dudit signal vidéo si celui-ci est transmis et/ou enregistré en utilisant ledit premier mode, et où soit le premier et le troisième, soit le deuxième et le quatrième desdits champs sont entrés afin d'être traités.

7. Appareil conforme à une ou plusieurs des réclamations 1 à 6, caractérisé en ce que ledit troisième moyen permet de retarder les pixels de chaque deuxième champ par une demi-période de ligne (Fig. 5).

8. Appareil conforme la revendication 7, caractérisé en ce que lesdits troisième et quatrième moyens sont combinés (Fig. 12) et génèrent des signaux de sortie ($Yout_{40}$) dudit signal vidéo si celui-ci est transmis et/ou enregistré en utilisant ledit deuxième mode.

9. Appareil conforme à la revendication 8, caractérisé en ce que ledit moyen combiné comporte un circuit de décalage horizontal (Fig. 10, Fig. 13) commandé par lesdits vecteurs de mouvements ($V_X$, $V_{X'}$).

10. Appareil conforme à la revendication 9, caractérisé en ce que ladite commande est exécutée à l'aide de circuits de tableau d'exploration (103, 104, 135 à 138).

11. Appareil conforme à une ou plusieurs des revendications 1 à 10, caractérisé en ce que ledit moyen permet de générer des signaux de sortie progressifs ($Yout_1$ et $Yout_2$, Fig. 21, $Uout_1$, $Uout_2$, $Vout_1$ et $Vout_2$, Fig. 36) et comporte également d'autres moyens, par exemple des circuits de retardement de champ et de ligne, des circuits et des commutateurs de décalage horizontal (162, Fig. 16 ; 184, 1816, 1823 S10, $S_{13}$, S11, Fig. 18 ; 2016 et $S_{16}$, Fig. 20 ; 3415 et $S_{26}$, Fig. 34 ; 3514, $S_{27}$ et 3515, Fig. 35) permettant l'interpolation verticale des lignes.

12. Appareil conforme à la revendication 11, caractérisé en ce que les pixels de luminance desdits signaux de sortie progressifs sont adaptifs horizontalement au vecteur de mouvement, interpolés si ledit signal vidéo est transmis et/ou enregistré avec ledit deuxième mode, où seuls les pixels des champs ayant une phase de mouvement égal sont utilisés comme signal d'entrée.

13. Appareil conforme à la revendication 1 et/ou 12 caractérisé en ce que ladite interpolation à adaptation de mouvement est exécutée en faisant correspondre deux champs traités par interpolation de mouvement (Fig. 8, Fig. 17).

FIG.1

FIG. 2

FIG.3

FIG.4

d: line distance

full
frame

vertically
filtered frame

FIG.5

FIG.6

FIG.7

FIG.8

FIG.9

FIG.10

$$\text{Integer} \left( \frac{V_x + \frac{V_x}{|V_x|}}{2} \right) \quad 103$$

$$\text{Integer} \left( \frac{V_x - \frac{V_x}{|V_x|}}{2} \right) \quad 104$$

$V_x$

$$V_x = \left( 0, \pm 1, \pm 2, \ldots \ldots, \pm 6 \right)$$

vertical interpolation

FIG.11

20

FIG.12

FIG.13

Fig. 14

FIG.15

FIG.16

input sequence

interpolated sequence

FIG.17

FIG. 18

FIG. 19

FIG.20

FIG.21

FIG. 22

diagonal prefilter
( 20 ms-mode)

10 % roll off

half nyquist filter
at transmitter side

5,6 MHz
(-3 dB)

6,75 MHz
(-3 dB)

resulting horizontal
frequency response

a)

a)  80 / 40 ms-mode

b)

b)  20 ms-mode

low pass filter
prior to MAC-decoding

8,1 MHz

$f^X$[MHz]

6,75 MHz

1   2   3   4   5   6   7   8

1,0

0,5

EP 0 484 844 B1

FIG.23

diagonal prefilter

MTF$_{cam}$ $_{625}$ $V/2$ : 1/50 Hz

compatibility improvement
filter within the BRE

6 dB

35%

resulting frequency
response

frequency response due to
line-shuffling

1/2 d
288 c/h

1/d
576 c/h

f$^y$

EP 0 484 844 B1

FIG. 24

diagonal prefilter

compatibility improvement filter
within the BRE

6 dB

compatibility improvement
postfilter (−10 dB at 288 c/h)

35%

resulting frequency
response

$MTF_{cam\ 625\ 1/2:1/50\ Hz}$

1/2d
288 c/h

1/d
576 c/h

$f^y$

EP 0 484 844 B1

$U_{out}$

$V_{out}$

625 l,
1:1,
50 Hz

P/S

T/2

625 l / 2:1 / 50 Hz

1st field, 2nd field,...

2nd field, 1st field,...

625 l / 2:1 / 50 Hz

$CI_{u,v}$ filter

Up-Conv.$_{u,v}$

1st field

2nd field

32 µs

T/2

625 l,
2:1,
50 Hz,

$U_{in}$

$V_{in}$

DATV Dec.

DATV

FIG. 26

FIG. 25

compatibility improvement filter within the BRE

diagonal prefilter

35%

$MTF_{cam}$ 625 1/2:1/50 Hz

frequency response due to line – shuffling

vertical upconversion ( line average)

resulting frequency response

1,0

0,5

1/2 d 288 c/h

1/d 576 c/h

f y

U – transmission

1st HD field (subset)  
transmitter side

2d

1st ND field  
receiver side

2nd ND field

V – transmission

1st HD field (subset)  
transmitter side

1st ND field  
receiver side

2nd ND field

FIG. 27

FIG.28

FIG.29

U

64µs

1/2

1

1/2
1/2

1

1/2
1/2

1

processed fields

|20 ms|

V

1

1/2

1/2

1

1/2

1/2

1

1/2

1/2

1

FIG.30

processed fields

FIG.31

EP 0 484 844 B1

FIG. 32

EP 0 484 844 B1

FIG. 33

EP 0 484 844 B1

FIG.34

EP 0 484 844 B1

FIG. 35

FIG.36